# FASCICULE DE BREVET EUROPEEN

(11) **EP 3 262 994 B1**
(45) Date de publication et mention de la délivrance du brevet: **01.05.2019**
(21) Numéro de dépôt: 17177778.2
(22) Date de dépôt: 26.06.2017
(51) Int. Cl.: A47J 31/36

(54) **DISPOSITIF DE PRÉPARATION DE BOISSON PAR INFUSION DE POUDRE CONTENU DANS UNE CAPSULE**
VORRICHTUNG ZUR GETRÄNKEZUBEREITUNG DURCH AUFGUSS EINES PULVERS, DAS IN EINER KAPSEL ENTHALTEN IST
DEVICE FOR PREPARING BEVERAGE BY BREWING A POWDER CONTAINED IN A CAPSULE

(30) Priorité: 29.06.2016 FR 1656063
(43) Date de publication de la demande: 03.01.2018
(73) Titulaire: Technopool Sarl, 06340 La Trinite (FR)
(72) Inventeur: FERRIER, Frédéric, 06340 CANTARON (FR)
(74) Mandataire: Domange, Maxime

(56) Documents cités:
- WO-A1-2014/080097
- US-A1- 2014 130 680

## Description

La présente invention concerne un dispositif de préparation de boisson par infusion de poudre contenant des arômes à extraire conditionnée dans une capsule rigide ou semi rigide et à travers laquelle on injecte un liquide, de préférence de l'eau.

Plus particulièrement, la présente invention concerne un dispositif de ce type adapté pour une capsule comprenant une paroi de fond rigide surmontée d'une paroi latérale rigide ou semi rigide présentant une surface de révolution, de préférence cylindrique ou tronconique, dont l'extrémité ouverte, de préférence de plus grand diamètre que la paroi de fond est bordée d'une collerette formant un rebord périphérique annulaire plat rigide, rebord plat sur lequel est scellé un opercule recouvrant la dite extrémité ouverte de la paroi latérale cylindrique ou tronconique. Les dites paroi de fond ou paroi latérale de révolution sont réalisées par exemple en matériau plastique, aluminium ou complexe plastique / aluminium tels que du PP ou complexe PP/Aluminium et de 0.2mm à 1mm d'épaisseur. Ledit opercule à perforer est un film plastique en PE, PP ou complexe PE, PP/Aluminium et de 0.05mm à 1mm d'épaisseur.

Par semi rigide, on entend que la paroi latérale de la capsule présente une certaine souplesse du fait de la nature du matériau et/ou surtout son épaisseur plus fine, de sorte qu'elle peut se déformer sous l'effet d'une pression quitte à se reformer élastiquement une fois la pression interrompue. Ainsi la paroi latérale de la capsule cylindrique ou tronconique à section circulaire peut se déformer sous l'effet d'une poussée exercée radialement et ainsi la section transversale peut s'ovaliser sous l'effet d'une pression extérieure latérale dans les conditions explicitées ci-après.

De même, le fond ainsi que la partie operculée peuvent se déformer en se bombant (incurvation) sous une augmentation de la pression interne.

Des capsules de ce type sont standardisées et présentent généralement les dimensions suivantes:
- volume interne de 2.5 à 5 cm3, et
- diamètre de l'ouverture au niveau de l'extrémité recouverte du dit opercule de 25 à 45mm.

La dite paroi de fond et ledit opercule peuvent être pré-perforés auquel cas les dites capsules sont conditionnées dans un emballage étanche.

Ce type de capsule rigide est utilisé dans des machines à café semi-automatiques dans lesquelles la capsule est introduite dans la machine dans le sens vertical permettant son éjection par gravité sans l'intervention manuelle de l'utilisateur. Des machines de ce type sont décrites dans le brevet EP 1 646 305.

Toutefois, dans les machines décrites dans l'art antérieur, le dispositif décrit présente les inconvénients suivants. La fermeture du groupe est manuelle via un levier/poignée ou un tiroir et l'éjection de la capsule se fait uniquement lorsque la poignée est relevée ou le tiroir ouvert par l'utilisateur afin de faire le café suivant.

Dans certaines machines l'éjection de la capsule est automatique à la fin du cycle café. Dans WO 2014/147128, un moteur électrique est utilisé ce qui engendre l'utilisation d'engrenages, de mécanismes complexes de capteurs et une gestion électronique adaptée.

Dans WO 2005/058111, on décrit un dispositif de préparation de boisson à partir de poudre contenant des arômes, conditionné sous forme de capsule du type ci-dessus dans lequel la capsule est introduite dans un compartiment de réception en position verticale disposé entre deux pièces aptes à être déplacées en translation relative dont une pièce comporte sur sa face avant un logement en creux apte à recevoir la paroi latérale de révolution de la capsule lorsque les deux pièces sont fermées l'une contre l'autre. En position d'ouverture, la capsule est retenue dans le dit compartiment de réception par une butée escamotable en sous face de la paroi latérale de la capsule. Puis, la butée s'escamote actionnée par un mécanisme lui-même en liaison cinématique lors de la translation de la capsule pour que la paroi latérale de la capsule puisse renter dans le dit logement creux faisant office de chambre d'infusion après rapprochement des deux parties mobiles. Enfin, après réouverture par éloignement des deux parties mobiles, la capsule est transférée en translation au-delà du compartiment de réception pour permettre l'évacuation de la capsule usagée par chute par gravité. Concomitamment, le mécanisme qui permet d'escamoter la butée est actionné en sens inverse en liaison cinématique avec la dite translation inverse pour être apte à retenir une nouvelle capsule.

Dans WO 2014/0800970, on décrit un dispositif de préparation de boisson à partir de dosettes de poudre contenant des arômes, de préférence une poudre compactée, conditionné sous forme de dosette présentant une forme de pastille plate ou ovoïde, ladite pastille pouvant être entourée d'une collerette plate périphérique ladite dosette comprenant une enveloppe, de préférence en matériau souple poreux ou micro perforé, de préférence du type papier filtre, remplie de ladite poudre.

Toutefois, ce dispositif n'est pas approprié pour la mise en oeuvre lorsque la poudre de café est conditionnée avec une capsule à paroi latérale de révolution du type décrit ci-dessus. Le document US 2014/0130680 décrit un dispositif de préparation de boissons à partir d'une capsule rigide.

Dans WO 2014/080097 on décrit un dispositif de préparation de boisson aromatisée, notamment à base d'arômes de café, apte à extraire des arômes par infusion d'une dosette de poudre en contenant, ledit dispositif comprenant :
- une première pièce comprenant une face avant formant une demi chambre d'infusion apte à recevoir la moitié de la pastille peine de café de la dite dosette, et
- une deuxième pièce comprenant une face avant disposée en vis-à-vis de la face avant de la première pièce et coaxialement, formant une demi chambre d'infusion apte à recevoir l'autre moitié de la pastille peine de café de la dite dosette, et
- une troisième pièce, dénommée berceau, apte à pivoter par rapport à un axe s'étendant dans une direction transversale perpendiculaire au dit axe longitudinal, de manière synchronisée avec une translation relative des deux première et deuxième pièces, ladite troisième pièce comprenant un orifice, apte à être traversé par une partie avant cylindrique de ladite première pièce lorsque ladite troisième pièce est en position verticale, et
- des moyens de déplacement en translation relative horizontale coaxiale desdites première pièce et deuxième pièce et pivotement synchronisé de ladite troisième pièce, entre :
- une position initiale d'ouverture et d'insertion dans laquelle lesdites première et deuxième pièces sont en éloignement maximal en translation, ladite troisième pièce étant située en position inclinée entre lesdites première et deuxième pièces, en position d'inclinaison maximale, ladite troisième pièce en position d'inclinaison maximale délimitant avec la face avant de ladite première pièce un compartiment d'insertion apte à recevoir et supporter ladite dosette, et
- une position de fermeture ou rapprochement maximal en translation relative des deux première et deuxième pièces dans laquelle lesdites faces avant desdites première et deuxième pièce sont en appui contre la collerette de la dosette, délimitant un compartiment étanche, dénommé chambre d'extraction, et
- une position de réouverture et évacuation par éloignement en translation des deux première et deuxième pièces, ladite troisième pièce en position d'inclinaison maximale délimitant avec la face avant de ladite deuxième pièce un compartiment d'évacuation au sein duquel la dosette usagée est transférée pour être évacuée par gravité en dehors dudit compartiment d'évacuation ouvert en partie inférieure.

L'avantage du berceau pivotant est qu'il permet de retenir la dosette en son sein en position initiale puis de libérer la dosette usagée par simple chute par gravité en coopérant directement avec les dites première et deuxième pièces de la position relative des deux pièces, sans nécessiter de dispositif de butée escamotable par un dispositif mécanique indépendant actionnable en liaison cinématique ou autre lors de la translation relative des deux pièces.

Toutefois, ce dispositif n'est pas approprié pour la mise en oeuvre lorsque la poudre de café est conditionnée avec une capsule à paroi latérale de révolution surmontée d'une collerette du type décrit ci-dessus.

L'objet de la présente invention est de fournir un dispositif amélioré plus simple et plus fiable dans son fonctionnement adapté à des capsules à paroi latérales rigide ou semi rigide cylindrique ou tronconique surmontée d'une collerette du type décrit ci-dessus sans nécessiter d'actionner un dispositif mécanique indépendant pour retenir puis libérer la capsule en fonction de la translation relative des deux pièces.

Pour ce faire, la présente invention fournit un dispositif de préparation de boisson aromatisée, à base d'arômes, notamment de café, à partir d'une poudre contenue dans une capsule rigide ou semi rigide présentant une paroi latérale de révolution, de préférence cylindrique ou de préférence encore tronconique à section circulaire, fermée d'un côté par une paroi de fond perforée ou apte à être perforée et de l'autre côté par un couvercle sous forme d'un film opercule perforé ou apte à être perforé, le dit couvercle recouvrant une collerette formant un rebord périphérique annulaire plat autour d'une extrémité de la dite paroi latérale, ledit dispositif comprenant:
- une première pièce contenant des moyens d'amenée de liquide vers et à travers la face avant de la dite première pièce, et
- une deuxième pièce contenant les moyens d'évacuation du dit liquide, la face avant de la deuxième pièce comprenant un logement de capsule apte à recevoir ladite paroi latérale de la capsule avec la paroi de fond de la dite capsule en appui contre la paroi de fond du dit logement, et
- des moyens de déplacement en translation relative coaxiale desdites première pièce et deuxième pièce entre :
   - (i) une position d'ouverture correspondant à un éloignement maximal des dites première et deuxième pièces, et
   - (ii) une position de fermeture correspondant à un rapprochement maximal des dites première et deuxième pièces délimitant ainsi un compartiment étanche d'extraction avec la paroi latérale de la capsule contenue dans ledit logement, et
- une troisième pièce aussi dénommée berceau, formant un réceptacle de la capsule, apte à être positionnée entre une face avant de la première pièce et une face avant de la deuxième pièce, ladite troisième pièce étant montée apte à pivoter par rapport à un axe transversal perpendiculaire à l'axe longitudinal de dite translation relative coaxiale, la dite troisième pièce étant apte à être entrainée avec la dite première ou deuxième pièce lors d'une dite translation relative coaxiale,
caractérisé en ce que la dite troisième pièce comprend:
- (i.1) des éléments de guidage et maintien de la dite capsule, la dite paroi latérale de la capsule s'étendant en dehors des dits éléments de guidage et maintien du côté de la dite deuxième pièce avec l'axe de ladite paroi latérale de la capsule positionné perpendiculaire à une direction longitudinale de guidage des dits éléments de guidage et maintien, et
- (i.2) au moins une première butée, la dite capsule après insertion de la dite troisième pièce étant empêchée par la dite première butée de chuter par l'extrémité inférieure ouverte les dits éléments de guidage et maintien en dite position d'ouverture, du fait qu'au moins une partie de la paroi latérale de la capsule est en contact avec la dite première butée en dite position d'ouverture, et
la dite troisième pièce est apte être entrainée en translation et à pivoter lors des étapes a) à c) suivantes, de telle sorte que :
a) lors d'une dite translation relative coaxiale de rapprochement de ladite première pièce et de la dite deuxième pièce, depuis la dite position d'ouverture jusqu'à une première position intermédiaire de rapprochement, la dite troisième pièce et l'axe de révolution de la dite paroi latérale de la capsule retenue par ladite butée se trouvent inclinées selon une première inclinaison, et en dite première position intermédiaire, une première partie de la dite paroi latérale de la capsule arrive en contact contre une deuxième butée, de préférence au niveau de la face avant de ladite deuxième pièce, et
b) lors de la poursuite dite translation relative coaxiale de rapprochement de ladite première pièce et de la dite deuxième pièce depuis une dite première position intermédiaire vers une dite position de fermeture, la dite deuxième butée exerce une poussée contre la dite première partie de la dite paroi latérale de la capsule, ladite poussée se transmettant sur ladite première butée ce qui provoque concomitamment d'une part le pivotement de la troisième pièce, depuis une dite première inclinaison vers une position dans laquelle la dite direction longitudinale des éléments de guidage est perpendiculaire à la direction de dite translation relative coaxiale des dites première et deuxième pièces en dite position de fermeture, et d'autre part une déformation élastique de ladite première butée ou de la dite paroi latérale de la capsule de sorte que ladite capsule est déplacée en translation par rapport à la dite première butée en pivotant jusqu'à ce que l'axe de révolution de la dite paroi latérale de la capsule se trouve disposé co-axialement avec l'axe longitudinal du dit logement de capsule en dite position de fermeture, et
c) lors d'une dite translation relative coaxiale inverse d'éloignement depuis la dite position de fermeture vers une deuxième position intermédiaire d'éloignement, la dite capsule est entrainée en translation relative coaxiale jusqu'à ce que la paroi latérale de révolution de la capsule se retrouve entièrement en dehors du dit logement de capsule, la dite capsule, n'étant plus retenue par la dite première butée, étant apte à être évacuée vers le bas en dehors de la dite troisième pièce en dite deuxième position intermédiaire d'éloignement.

Plus particulièrement, la dite troisième pièce est apte à être entrainée avec la dite première pièce lors d'une dite translation relative coaxiale et la dite troisième pièce comprend:
- (i) des éléments de guidage et maintien de la dite capsule comprenant deux premières rainures en vis à vis aptes à d'une part recevoir et guider en translation de haut en bas ladite collerette, avec deux côtés latéraux diamétralement opposés de ladite collerette dans et entre lesdites premières rainures, et d'autre part aptes à supporter une face de la dite collerette en vis à vis de la dite deuxième pièce lorsque ladite troisième pièce est dans une position inclinée selon une première inclinaison, et
- (ii) au moins une dite première butée disposée au niveau des dites premières rainures, au moins une partie inférieure de la paroi latérale de la capsule reposant sur la dite première butée en dite position d'ouverture, et
la dite troisième pièce est apte à être entrainée en translation et à pivoter lors des étapes a) à c) suivantes, de telle sorte que :
- à l'étape a), en dite première position intermédiaire de rapprochement, la partie la plus basse de la dite paroi de fond est plus basse que la partie la plus basse de la dite collerette, et en dite première position intermédiaire, une première partie supérieure de la dite paroi latérale de la capsule arrive en contact contre la face avant de ladite deuxième pièce au niveau d'une extrémité avant supérieure de la paroi latérale de révolution dudit logement de capsule formant la dite deuxième butée, et
- à l'étape b), l'extrémité avant supérieure de la paroi latérale de révolution dudit logement de capsule, exerce une poussée contre la dite première partie supérieure de la dite paroi latérale de la capsule, ladite poussée se transmettant sur ladite première butée ce qui provoque concomitamment d'une part le pivotement de la troisième pièce, depuis une dite première inclinaison vers une position verticale des premières rainures en dite position de fermeture et d'autre part une déformation élastique de ladite butée ou de la dite paroi latérale de la capsule de sorte que ladite capsule est déplacée en translation de haut en bas par rapport à la dite première butée vers une zone inférieure des dites premières rainures, et
- à l'étape c), la dite troisième pièce ne pivote pas et reste en position avec les dites premières rainures verticales, et la dite capsule est entrainée par la troisième pièce en translation relative inverse jusqu'à ce que la dite capsule, n'étant plus retenue par la dite première butée, puisse être évacuée vers le bas en dehors des dites premières rainures en dite deuxième position intermédiaire d'éloignement.

On entend ici par en «avant» ou «arrière» de la première pièce et des éléments qui lui sont solidaires tels que la dite troisième pièce, ladite dosette et ledit châssis décrits ci-après, des positions relatives au sens de déplacement en translation de l'arrière» vers l'avant lors de ladite translation relative des deux première et deuxième depuis une dite position d'éloignement vers une dit position de rapprochement dans la direction longitudinale axiale XX', et un déplacement de «l'arrière» vers l'«avant» lors de la translation depuis une dite position de rapprochement vers une dite position d'éloignement et d'évacuation. Inversement, on entend par en «avant» ou «arrière» de la deuxième pièce des positions relatives dans la direction longitudinale axiale XX', «avant» étant plus proche de la première pièce et «arrière» plus éloigné de la première pièce.

On comprend que :
- ledit dispositif est apte à extraire les arômes contenus dans une poudre lorsque ladite capsule est traversée par un liquide, de préférence de l'eau sous pression, ledit liquide entrant et sortant de la dite capsule à travers des perforations du dit couvercle et de la dite paroi de fond;
- les faces avant de la première pièce et de la deuxième pièce sont en vis-à-vis;
- la dite position d'éloignement maximal permet l'insertion initiale et l'évacuation finale de ladite capsule par gravité vers et respectivement depuis ledit réceptacle de la dite troisième pièce ouvert en partie supérieure et respectivement en partie inférieure;
- c'est une paroi de fond du dit logement de capsule qui est apte à venir en appui contre la paroi de fond de la dite capsule ;
- en dite position de rapprochement maximale, ladite capsule peut être traversée par un liquide, de préférence de l'eau sous pression provenant de la dite première pièce ou tête d'entrée et évacué à travers la dite deuxième pièce ou tête de sortie, ledit liquide entrant et sortant de la dite capsule à travers des perforations de la dite paroi de fond et du dit couvercle;
- la dite capsule peut coulisser par gravité de bas en haut dans les dites premières rainures lors de son insertion ou évacuation, avec ladite paroi latérale et la dite paroi de fond de la capsule s'étendant en dehors des dites premières rainures du côté de la face avant de la dite deuxième pièce ;
- les dites premières rainures sont aptes à ne retenir que la face de la dite collerette en vis à vis de la face avant de la deuxième pièce dans une zone inférieure, c'est-à-dire aussi retenir la capsule en translation dans la direction axiale de la paroi latérale de la capsule, de manière à ce que :
- d'une part, la face avant de la première pièce puisse venir en appui contre la collerette en dite position de fermeture, et
- d'autre part, la collerette (et la capsule avec elle) soit entrainée en translation avec le dit berceau lors de la translation inverse d'éloignement depuis la dite position de fermeture jusqu'à sortie de la capsule en dehors du logement de capsule ;
- la dite butée retenant la dite paroi latérale de la capsule reposant sur la dite butée, empêche l'évacuation de ladite capsule par gravité à travers l'ouverture inférieure délimitée par les extrémités inférieures des dites premières rainures lorsque la dite collerette est insérée dans ledit réceptacle en dite position d'ouverture ;
- lorsque la dite capsule repose sur la dite butées, les surfaces d'appui en contact de la capsule sont situées dessous l'axe de révolution de la dite paroi latérale de révolution de la capsule, laquelle paroi latérale de capsule est situé au moins en partie au-dessus des butées ;
- la dite troisième pièce est montée en pivotement par rapport à un axe transversal YY' notamment horizontal, perpendiculaire à la direction de translation et à un axe longitudinal XX' du dit dispositif passant par le centre des deux faces avant des dites première et deuxième pièces lorsque les dites première et deuxième pièces en dite position de rapprochement maximal ou perpendiculaire à un plan longitudinal XZ du dit dispositif comprenant les deux axes des dites première et deuxième pièces passant par le centre des deux faces avant des dites première et deuxième pièces ;
- le dit logement de la face avant de la deuxième pièce (2) est apte à recevoir ladite paroi de fond et ladite paroi latérale de la capsule lorsque celle ci-est positionnée coaxialement au dit logement, et la partie plane de la face avant de la première pièce est apte à venir en appui contact contre la surface de la dite collerette et une partie au moins de la surface dudit opercule lorsque la dite capsule est positionnée coaxialement avec l'axe longitudinal du dispositif passant par le centre des dites faces avant des deux première et deuxième pièces ; et
- dans la dite première inclinaison, la dite capsule est inclinée de sorte que le centre dudit opercule se trouve situé au-dessus de l'axe du logement de capsule ;
- lorsque la partie inférieure de la paroi de fond de la capsule pénètre dans ledit logement de capsule, la capsule est retenue par la partie inférieure de la paroi latérale du dit logement de capsule, ceci empêchant la capsule de sortir des dites premières rainures et lui permettant de rester au niveau de ladite zone inférieure des premières rainures sans être éjectée par gravité en dehors dudit réceptacle de la dite troisième pièce ouvert en partie inférieure, en dépit de la poussée de retour élastique de la dite butée ou dite paroi latérale de capsule exercée contre la partie supérieure de la paroi latérale de la capsule ou respectivement contre ladite butée ;
- en dite position de rapprochement maximal, l'espace entre la face avant de la première pièce et de la deuxième pièce est apte à recevoir les premières rainures latérales du berceau qui retiennent la capsule, cet espace recevant la collerette et l'épaisseur du berceau ;
- la chambre d'extraction est constituée par la paroi de fond du dit logement, la paroi latérale cylindrique de la capsule et la face avant de la première pièce en appui contre la dite collerette.

La fonction de ce logement est double.

La première fonction est de retenir la capsule. Tout d'abord, lorsque par translation de la première pièce, un point supérieur de la paroi latérale de la capsule inclinée entre en contact avec un point supérieur dudit logement celui-ci constituant une butée rigide de blocage qui a pour effet que le berceau pivote si l'on continue la translation de rapprochement des première et deuxième pièces. A défaut, lorsque le berceau se redresse sous l'effet de la translation de la première pièce, en l'absence de butée de blocage, la capsule se redresserait également. En d'autres termes, la butée de la capsule contre le logement de la face avant de la deuxième pièce empêche la capsule de suivre le mouvement du berceau en pivotement et chasse vers le bas la capsule de sa position de retenue par ladite butée dans le berceau. Ainsi du fait du pivotement du berceau et de la capsule, la capsule se retrouve avec son axe dans l'axe dudit logement et peut s'insérer dans ledit logement par translation. Ensuite, le logment de capsule empêche la capsule de chuter par gravité tant que la paroi latérale de capsule est engagée dans le dit logement de capsule.

La deuxième fonction du logement de capsule est de délimiter en partie au moins une chambre d'extraction et d'empêcher l'explosion/déformation de la paroi latérale de la capsule sous l'effet de la pression de l'eau injectée dans la capsule en dite position de fermeture par rapprochement maximal pour l'extraction des arômes qu'elle contient.

Ultérieurement après extraction du café lorsque l'on déplace à nouveau la partie mobile en translation, la capsule usagée sort de son logement du fait qu'elle est entrainée et retenue par les dites premières rainures du berceau et dès qu'elle est sortie complètement dudit logement elle tombe par gravité car elle n'est pas retenue par la dite butée.

L'opercule et/ou la paroi de fond de la capsule peuvent être pré-perforés. Alternativement l'opercule et/ou la paroi de fond de la capsule peuvent ne pas être perforés auquel cas la face avant de la première pièce et/ou respectivement la paroi de fond du dit logement comportent des picots qui provoquent le percement de perforations de l'opercule et/ou respectivement de la paroi de fond de la capsule lors de la translation en dite position de rapprochement maximal.

Dans une première variante de réalisation, lorsque ladite paroi latérale de la capsule est rigide, ladite première butée est une butée élastique apte à se déformer sous l'effet d'une force appliquée contre et par-dessus la dite paroi latérale de la capsule reposant sur la dite première butée élastique de sorte que d'une part à l'étape b) ladite butée élastique est escamotée par la dite capsule et la dite paroi latérale de la capsule est déplacée dessous la dite première butée, et d'autre part à l'étape c) ladite première butée élastique exerce une poussée vers le bas sur une deuxième partie supérieure de la dite paroi latérale de la capsule qui peut être évacuée vers le bas en dehors des dites premières rainures en dite deuxième position intermédiaire d'éloignement sans nécessiter un autre éjecteur.

Dans une deuxième variante de réalisation, lorsque ladite paroi latérale de la capsule est semi rigide, ladite première butée est une butée rigide non déformable et non déplaçable, de sorte que d'une part à l'étape b) la paroi latérale de la capsule est déformée élastiquement et la dite paroi latérale de la capsule est déplacée dessous la dite première butée, et d'autre part à l'étape c) une deuxième partie supérieure de la dite paroi latérale de la capsule déplacée dessous la dite première butée exerce une poussée vers le haut sur la dite première butée rigide et la capsule peut être évacuée vers le bas en dehors des dites premières rainures en dite deuxième position intermédiaire d'éloignement sans nécessiter un autre éjecteur.

On comprend que cette poussée de la paroi latérale de la capsule contre la butée se fait par élasticité de la paroi latérale de la capsule, dont la déformation se traduit par une ovalisation de sa section transversale et qui tend à reprendre sa forme initiale à section circulaire.

Plus particulièrement, ladite troisième pièce comprend des dites premières rainures comprenant :
- une zone supérieure dans laquelle les dites premières rainures sont aptes à, retenir la dite collerette sur ses deux faces lors d'une dite translation relative coaxiale depuis ladite position d'ouverture vers la dite première position intermédiaire, et
- une zone inférieure dans laquelle, en dite position de fermeture, une partie périphérique de la face avant de ladite première pièce est apte à venir en appui contact contre une face de la dite collerette en dehors dudit logement, l'autre face de la dite collerette étant en appui sur les dites premières rainures et apte à entrainer la capsule en dite translation relative inverse d'éloignement vers une dite deuxième position intermédiaire à l'étape b); et
- la dite première butée au niveau de ladite zone inférieure desdites premières rainures, apte à retenir la dite paroi latérale de la capsule reposant sur une surface d'appui supérieure de la dite première butée.

Plus particulièrement, les dites premières rainures comprennent deux rebords longitudinaux de part et d'autre d'une paroi de fond et que le rebord longitudinal avant du côté de la dite deuxième pièce est continu sur toute les dites zone supérieure et zone inférieure tandis que le rebord longitudinal arrière du côté de la dite première pièce est discontinu et ne s'étend pas au niveau de ladite zone inférieure laissant le passage pour que la face avant de la dite première pièce puisse venir en appui contre la dite collerette de capsule, le rebord avant du côté de la deuxième pièce assurant la retenue de la dite collerette en vis à vis de la face avant de la deuxième pièce au niveau de ladite zone inférieure en partie au moins lorsque le berceau est en position inclinée d'ouverture et entrainant la capsule en translation inverse pour la sortir de son logement de la deuxième pièce après extraction.

Plus particulièrement, un châssis supporte au moins les dites première pièce et deuxième pièce et les dits moyens de translation relative, ladite troisième pièce étant montée à pivotement sur le dit châssis commun supportant les trois pièces ou solidaire d'une des deux première et deuxième pièces, et lors d'une dite translation relative des deux première et deuxième pièces, la dite deuxième pièce est solidaire du dit châssis de manière immobile par rapport à celui-ci, et la dite première pièce est mobile en translation relative par rapport au châssis et la dite deuxième pièce.

Plus particulièrement, le dispositif comprend deux dites premières butées de préférence disposées respectivement sur chacune des dites premières rainures en vis à vis l'une de l'autre.

Plus particulièrement, la dite deuxième pièce est solidaire du dit châssis de manière immobile par rapport à celui-ci, et la dite première pièce est mobile en translation relative par rapport au châssis et la dite deuxième pièce, la dite troisième pièce étant fixée de manière articulée en rotation sur la dite première pièce.

La présente invention a également pour objet un procédé d'utilisation d'un dispositif selon l'invention, caractérisé en ce qu'on réalise les étapes successives suivantes :
1- on insère par gravité une dite capsule dans les dits premiers éléments de guidage et de maintien d'un dit réceptacle de la dite troisième pièce inclinée en dite position d'ouverture, ladite capsule étant retenue par au moins une dite première butée, puis
2- on réalise une translation relative de rapprochement de la dite première pièce et de la dite troisième pièce par rapport à la dite deuxième pièce depuis ladite position initiale d'ouverture jusqu'à une dite première position intermédiaire dans laquelle une dite deuxième butée arrive en contact contre une première partie de la dite paroi latérale de la capsule,
3- on poursuit la dite translation relative de rapprochement de ladite première pièce et de la dite troisième pièce depuis une dite première position intermédiaire de rapprochement vers une dite position de fermeture, et la dite deuxième butée exerce une poussée contre la dite première partie de la dite paroi latérale de la capsule, poussée qui se transmet sur ladite première butée ce qui provoque concomitamment d'une part le pivotement de la troisième pièce et de ladite capsule depuis une dite première inclinaison vers une position dans laquelle la dite direction longitudinale des éléments de guidage est perpendiculaire à la direction de dite translation relative coaxiale des dites première et deuxième pièces en dite position de fermeture, et d'autre part la déformation élastique de ladite butée ou de la dite capsule, de sorte que ladite capsule est déplacée en translation par rapport à la dite première butée et l'axe de révolution de la dite paroi latérale de la capsule pivote pour se positionner co-axialement avec l'axe longitudinal du dit logement de capsule en dite position de fermeture, et
4- en dite position de fermeture, d'une part la face avant de la dite première pièce est plaquée contre la collerette et de préférence une partie au moins de l'opercule de la dite capsule, et d'autre part la paroi de fond dudit logement est plaquée contre la paroi de fond de la dite capsule, délimitant ainsi un compartiment étanche formant une chambre d'extraction avec la paroi latérale de la capsule insérée dans le dit logement de capsule, et on réalise une injection de liquide à travers une ou des perforations dudit opercule de ladite capsule avec évacuation dudit liquide à travers des perforations de la paroi de fond de la dite capsule dans la dite chambre d'extraction, et
5- on réalise une translation relative coaxiale inverse d'éloignement de la dite première pièce et de la dite troisième pièce par rapport à la dite deuxième pièce depuis la dite position de fermeture vers une deuxième position intermédiaire d'éloignement, la dite capsule étant entrainée en translation relative inverse jusqu'à ce que la paroi latérale de révolution de la capsule se retrouve entièrement en dehors du dit logement de capsule en dite deuxième position intermédiaire d'éloignement, et
6- en dite deuxième position intermédiaire d'éloignement, la dite capsule n'étant plus retenue par la dite première butée, est évacuée vers le bas en dehors par l'extrémité inférieure ouverte de ladite troisième pièce, et
7- on réalise le pivotement de la dite troisième pièce depuis une position avec les dites premières rainures verticales vers une position avec dites premières rainures inclinées en poursuivant la dite translation vers ladite position d'ouverture.

D'autres caractéristiques et avantages de la présente invention apparaîtront à la lumière de la description détaillée d'un mode de réalisation fait en référence aux figures suivantes :
- les figures 1A et 1B représentent deux vues en perspective d'un dispositif selon l'invention en dite position d'ouverture;
- la figure 1C représente une coupe longitudinale axiale verticale d'une partie du dispositif des figures 1A et 1B en position d'ouverture sans capsule;
- les figures 1D et 1E représentent deux vues en perspective (figure 1D) et de côté (figure 1E) de la troisième pièce dénommée berceau;
- la figure 2A représente une coupe longitudinale axiale verticale d'une partie du dispositif des figures 1A et 1B en position d'ouverture avec capsule;
- les figures 2B et 2B' représentent deux vues en coupe selon BB de la figure 2A avec des butées flexibles 3b coopérant avec une capsule rigide (figure 2B) et avec des butées rigides 3b coopérant avec une capsule semi rigide (figure 2B');
- les figures 2C, 2C' et 2D représentent des vues en perspective (figure 2C pour berceau à butées flexibles, figure 2C' pour berceau à butées rigides) et de côté (figure 2D) de l'introduction d'une capsule dans la troisième pièce dénommée berceau;
- la figure 3A représente une coupe longitudinale axiale verticale d'une partie du dispositif des figures 1A et 1B en dite première position intermédiaire avec la capsule butant contre la face avant de la deuxième pièce 2;
- les figures 3B et 3B' représentent deux vues en coupe selon BB de la figure 3A avec des butées flexibles 3b coopérant avec une capsule rigide (figure 3B) et avec des butées rigides 3b coopérant avec une capsule semi rigide à section transversale ovalisée (figure 3B');
- la figure 4A représente une coupe longitudinale axiale verticale d'une partie du dispositif des figures 1A et 1B en position de fermeture avec la capsule dans le dit logement de la deuxième pièce 2;
- les figures 4B et 4B' représentent deux vues en coupe selon BB de la figure 4A avec des butées flexibles 3b coopérant avec une capsule rigide (figure 4B) et avec des butées rigides 3b coopérant avec une capsule semi rigide à section transversale ovalisée (figure 4B');
- les figures 5A et 5A' représentent des coupes longitudinales axiales verticales d'une partie du dispositif des figures 1A et 1B en dite deuxième position intermédiaire avec la capsule entièrement en dehors du dit logement de la deuxième pièce 2 (figure 5A) et en position en cours de chute avec le berceau rétabli en position inclinée (figure 5A'); et
- la figure 5B représente une vue en coupe selon BB de la figure 5A avec des butées flexibles 3b coopérant avec une capsule rigide (figure 4B) et avec des butées rigides 3b coopérant avec une capsule semi rigide (figure 4B');

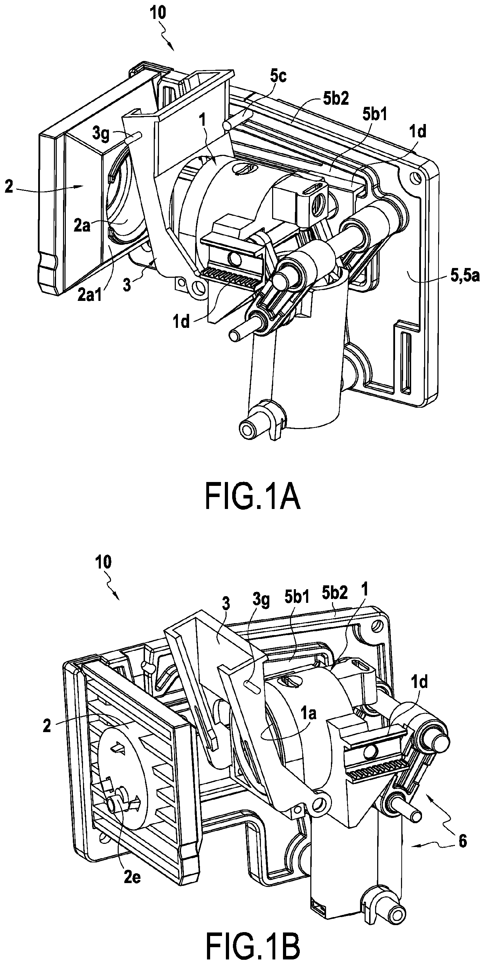

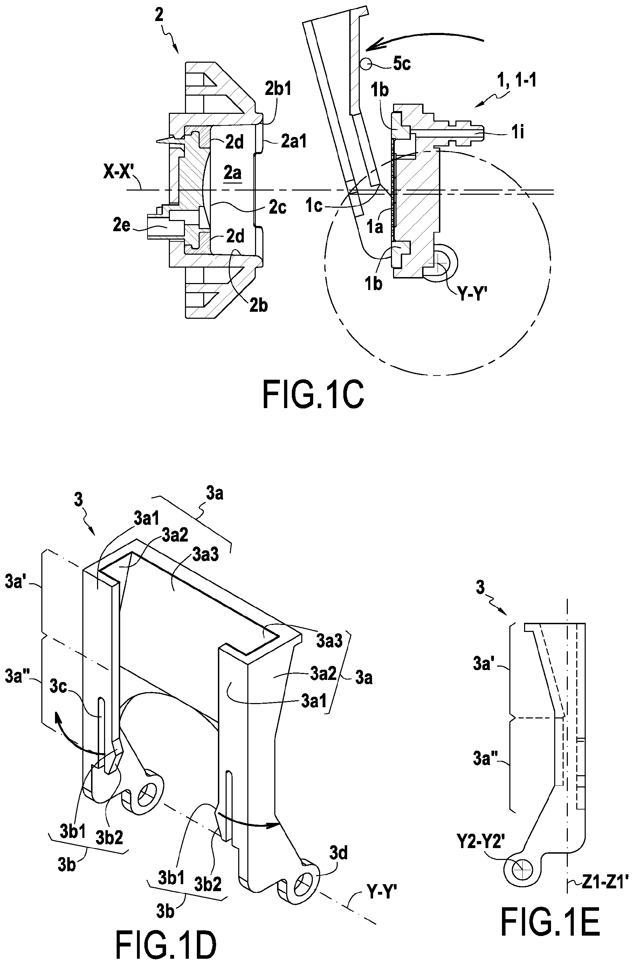

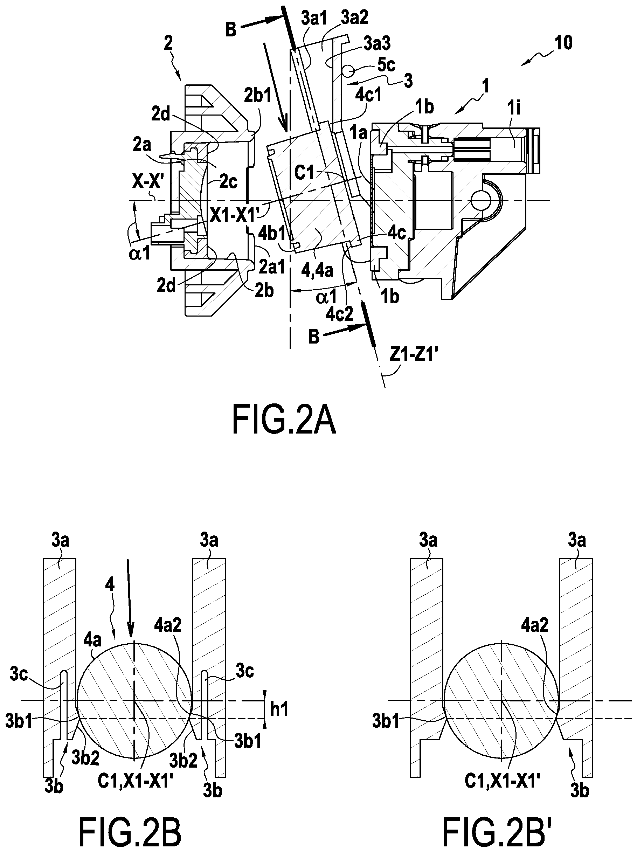

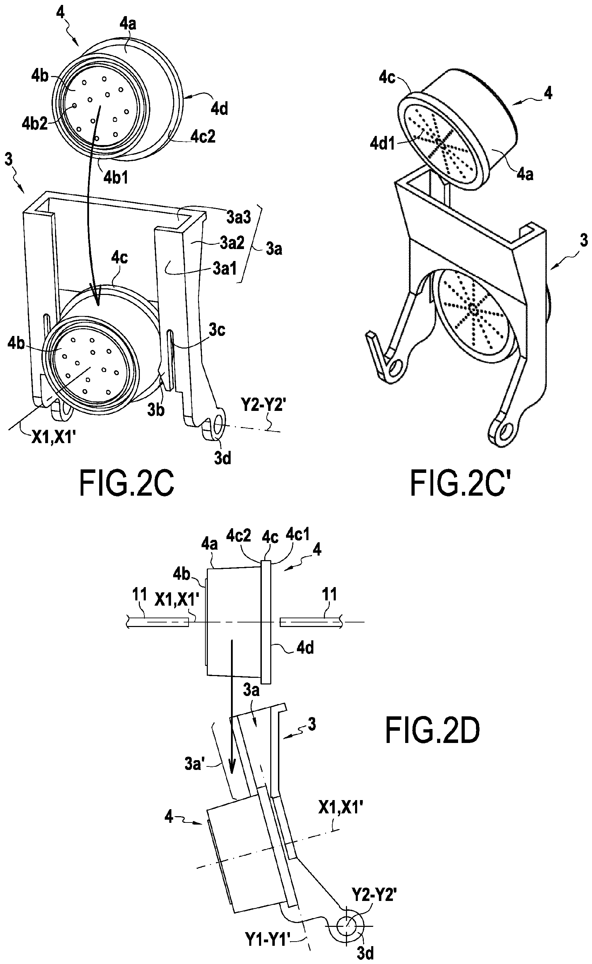

Sur les figures 1A et 1B, on a représenté un dispositif selon l'invention aussi dénommé « groupe d'extraction » destiné à être inséré dans une machine à café dont on voit le capot 11 sur la figure 2D avec une fente 11 à travers laquelle on insère dans le berceau 3 une capsule 4 rigide ou semi rigide présentant une paroi latérale de révolution 4a, de préférence cylindrique ou de préférence encore tronconique à section circulaire, fermée d'un côté par une paroi de fond 4b perforée 4b1 ou apte à être perforée et de l'autre côté par un couvercle 4d sous forme d'un film opercule perforé 4d1 ou apte à être perforé, le dit couvercle recouvrant une collerette 4c formant un rebord périphérique annulaire plat autour d'une extrémité de la dite paroi latérale 4a.

Le dispositif comprend:
- une première pièce 1 contenant des moyens d'amenée 1i de liquide vers et à travers la face avant la de la dite première pièce, et
- une deuxième pièce 2 contenant les moyens d'évacuation 2e du dit liquide, la face avant 2a1 de la deuxième pièce 2 comprenant un logement de capsule 2a apte à recevoir ladite paroi latérale 4a de la capsule avec la paroi de fond 4b de la dite capsule en appui contre la paroi de fond 2c,2d du dit logement 2a, et
- des moyens de déplacement en translation relative 6 coaxiale desdites première pièce 1 et deuxième pièce 2 entre
   - (i) une position d'ouverture correspondant à un éloignement maximal des dites première et deuxième pièces, et
   - (ii) une position de fermeture correspondant à un rapprochement maximal des dites première et deuxième pièces, et
- une troisième pièce 3 aussi dénommée berceau, formant un réceptacle de la capsule, apte à être positionnée entre une face avant la de la première pièce et une face avant 2a1 de la deuxième pièce, ladite troisième pièce étant montée apte à pivoter par rapport à un axe transversal YY' perpendiculaire à l'axe longitudinal XX' de dite translation relative coaxiale, la dite troisième pièce 3 étant apte être entrainée avec la dite première ou deuxième pièce lors d'une dite translation relative coaxiale.

La dite troisième pièce 3 est apte à être entrainée avec la dite première pièce lors d'une dite translation relative coaxiale et la dite troisième pièce comprend:
- (i.1) des éléments de guidage et maintien de la dite capsule comprenant deux premières rainures 3a en vis à vis aptes à d'une part recevoir et guider en translation de haut en bas ladite collerette, avec deux côtés latéraux diamétralement opposés de ladite collerette dans et entre lesdites premières rainures, la dite paroi latérale de la capsule s'étendant en dehors des dites premières rainures du côté de la dite deuxième pièce avec l'axe X1X1' de ladite paroi latérale de la capsule positionné perpendiculaire à une direction longitudinale de guidage Y1Y1' des dites premières rainures, et d'autre part aptes à supporter une face 4c2 de la dite collerette en vis à vis de la dite deuxième pièce lorsque ladite troisième pièce est dans une position inclinée selon une première inclinaison, et
- (i.2) au moins une dite première butée 3b disposée au niveau des dites premières rainures, la dite capsule après insertion de la dite collerette dans lesdites premières rainures étant empêchée par la dite première butée de chuter par dessous les dites premières rainures en dite position d'ouverture, du fait qu'au moins une partie inférieure 4a2 de la paroi latérale de la capsule repose sur la dite première butée en dite position d'ouverture.

La dite troisième pièce 3 est apte être entrainée en translation et à pivoter lors des étapes a) à c) suivantes, de telle sorte que :
a) lors d'une dite translation relative coaxiale de rapprochement de ladite première pièce et de la dite deuxième pièce, depuis la dite position d'ouverture jusqu'à une première position intermédiaire de rapprochement, la dite troisième pièce et l'axe de révolution X1X1' de la dite paroi latérale 4a de la capsule retenue par une dite première butée se trouvent inclinées selon une première inclinaison α1 dans laquelle la partie la plus basse 4b1 de la dite paroi de fond 4b est plus basse que la partie la plus basse de la dite collerette 4c, et en dite première position intermédiaire, une première partie supérieure 4a1 de la dite paroi latérale de la capsule arrive en contact contre la dite deuxième butée sur face avant de ladite deuxième pièce au niveau d'une extrémité avant supérieure 2b1 de la paroi latérale de révolution 2b dudit logement 2a de capsule, et
b) lors de la poursuite dite translation relative coaxiale de rapprochement de ladite première pièce et de la dite deuxième pièce depuis une dite première position intermédiaire vers une dite position de fermeture, l'extrémité avant supérieure 2b1 de la paroi latérale de révolution 2b dudit logement 2a de capsule formant une deuxième butée, exerce une poussée contre la dite première partie supérieure 4a1 de la dite paroi latérale de la capsule, ladite poussée se transmettant sur ladite première butée 3b ce qui provoque concomitamment d'une part le pivotement de la troisième pièce, depuis une dite première inclinaison vers une position verticale des premières rainures en dite position de fermeture et d'autre part une déformation élastique de ladite première butée ou de la dite paroi latérale 4a de la capsule de sorte que ladite capsule est déplacée en translation de haut en bas par rapport à la dite première butée vers une zone inférieure 3a" des dites premières rainures en pivotant jusqu'à ce que l'axe de révolution X1X1' de la dite paroi latérale de la capsule se trouve disposé co-axialement avec l'axe longitudinal XX' du dit logement de capsule en dite position de fermeture, et
c) lors d'une dite translation relative coaxiale inverse d'éloignement depuis la dite position de fermeture vers une deuxième position intermédiaire d'éloignement, la dite troisième pièce ne pivote pas et reste en position avec les dites premières rainures verticales, et la dite capsule est entrainée par la troisième pièce en translation relative inverse jusqu'à ce que la paroi latérale 4a de révolution de la capsule se retrouve entièrement en dehors du dit logement de capsule 2a en dite deuxième position intermédiaire d'éloignement, la dite capsule, n'étant plus retenue par la dite butée, étant apte à être évacuée vers le bas en dehors des dites premières rainures en dite deuxième position intermédiaire d'éloignement.

Sur les figures 1A et 1B, le dispositif selon l'invention 10 comprend :
- une première pièce 1 dénommée tête d'entrée contenant des moyens d'amenée 1i de liquide vers et à travers des perforations 4d1 dudit couvercle, apte à être déplacée en translation par rapport à un châssis 5 à l'aide desdits moyens de déplacement en translation relative 6, et
- une deuxième pièce 2 dénommée tête de sortie contenant les moyens d'évacuation 2e du dit liquide en sortie des perforations 4c1 de la paroi de fond de la capsule, la face avant de la deuxième pièce 2 comprenant un logement de capsule 2a apte à recevoir ladite paroi latérale de la capsule et venir en appui contre la paroi de fond 4b de la dite capsule, la dite deuxième pièce restant fixe par rapport audit châssis 5 et n'étant donc pas apte à être déplacée en translation à l'aide desdits moyens de déplacement en translation relative, et
- une dite troisième pièce montée à pivotement sur ledit châssis commun 5 supportant les trois pièces 1, 2 et 3, la dite troisième pièce étant solidaire de la dite première pièce en dite translation.

Ladite première pièce 1 comprend des premiers éléments de guidage en translation 1d coopérant en translation relative avec des premiers éléments de guidage complémentaires 5b solidaires d'un flanc 5a dudit châssis.

Dans un mode de réalisation, ladite troisième 3 pièce comprenant des deuxièmes éléments de guidage en translation 3d notamment sous forme de doigt, coopérant avec des deuxièmes éléments de guidage complémentaires, notamment la face supérieure 5b2 d'un flanc 5a dudit châssis, de telle sorte que ladite troisième pièce reste en dite première inclinaison lors de la translation relative de la troisième pièce depuis la dite position d'ouverture jusqu'à une dite première position intermédiaire de rapprochement.

Lesdits moyens de translation relative comprennent un système de biellettes 6 actionnable manuellement par un levier ou de façon motorisée de préférence par un vérin, du type décrit dans WO 2014/080097 ledit système comprenant deux biellettes 6b1, 6b2 actionnées autour des axes 6a1, 6a2 et6a3 par un vérin 6c assurant la liaison cinématique en translation des dites première et deuxième pièces.

Le berceau 3 est constitué de deux premières rainures parallèles disposées en vis à vis symétriquement par rapport à un plan axial vertical médian passant par l'axe XX' de translation relative coaxiale des deux pièces 1 et 2, formant un réceptacle de la capsule. Le berceau 3 est positionné entre une face avant la de la première pièce et une face avant 2a1 de la deuxième pièce.

Les dites premières rainures comprennent deux rebords longitudinaux 3a1, 3a3 de part et d'autre d'une paroi de fond 3a2 et le rebord avant 3a1 du côté de la dite deuxième pièce est continu sur toute la longueur des zone supérieure 3a' et zone inférieure 3a". Le rebord arrière 3a3 du côté de la dite première pièce ne s'étend pas au niveau de ladite zone inférieure 3a" laissant le passage pour que la face avant la de la dite première pièce puisse venir en appui directement contre la dite collerette 4c de capsule en dit position de rapprochement maximal, le dit rebord avant 3a1 du côté de la deuxième pièce assurant la retenue de la dite collerette en vis à vis de la face avant de la deuxième pièce au niveau de ladite zone inférieure 3a" en partie au moins lors d'une dite translation d'éloignement entrainant la sortie de la dite capsule comme décrit ci-après.

Les dits rebord avant 3a1 et rebord arrière 3a3 et paroi de fond 3a3 des dites premières rainures forment en section transversale un U au niveau des dites zones supérieures de premières rainures et forment un L au niveau des dites zones inférieures de premières rainures.

Les dits rebords avant 3a1 et rebord arrière 3a3 des premières rainures ne sont pas parallèles entre eux mais forment des rainures évasées plus large à leurs sommets formant une sorte de trémie pour faciliter l'insertion de la dite capsule au niveau du sommet des dites premières rainures. Les deux rebords arrière 3a3 se rejoignent dans une zone supérieure 3a' des dites rainures et forment une face arrière verticale de la trémie lorsque le berceau est incliné en position d'ouverture.

En position de fermeture, les faces avant desdites première et deuxième pièces comprennent des surfaces planes la et respectivement 2a1 aptes à venir en appui contact contre une face 4c1 de la dite collerette 4c en dehors dudit logement pour la face avant la (via un joint 1b) et respectivement les rebords avant 3a1 du berceau pour la face 2a1, le rebord avant 3a1 étant intercalé entre la face avant 2a1 de la deuxième pièce et la face 4c2 de la collerette 4c.

La dite troisième pièce est articulée en rotation autour d'un axe de rotation Y2Y2' perpendiculaire à l'axe XX' du dit logement de capsule 2a situé dessous le niveau dudit logement de capsule 2a et de préférence situé dessous la partie 1b face avant de la première pièce apte à venir en appui contre la dite collerette 4c et de préférence encore en retrait par rapport à la face avant de la première pièce et solidaire de la dite première pièce.

Dans le mode de réalisation des figures, la dite troisième pièce est articulée en rotation au niveau de chapes perforées 3d disposées en retrait de chacune desdites premières rainures du côté de la dite première pièce et dessous ladite zone inférieure 3a' des dites premières rainures.

La dite troisième pièce est inclinée en dite position initiale d'ouverture, de préférence d'un angle al de 10 à 30°, par rapport à un plan vertical transversal perpendiculaire audit axe longitudinal XX' du dit logement de capsule 2a, le dit axe XX' passant de préférence par le centre de la face avant de la dite première pièce.

Dans le mode de réalisation des figures, la face avant de la première pièce comprend un premier joint périphérique d'étanchéité 1b apte à venir se plaquer sur tout le pourtour de ladite collerette 4c de la capsule en dite position de rapprochement maximal des deux première et deuxième pièces.

De même, le dit logement de capsule 2a de la dite deuxième pièce est délimité par une paroi latérale cylindrique 2b et comprend une paroi de fond 2c bordée par un deuxième joint périphérique d'étanchéité 2d contre lequel la périphérie de la paroi de fond 4b de la dite capsule est apte à venir en appui en dite position de fermeture des deux première et deuxième pièces.

De préférence, la face avant de la première pièce comprend une première plaque perforée la apte à diffuser le liquide sous pression à travers les perforations dudit opercule de la capsule, la dite première plaque perforée étant bordée par le dit premier joint.

Dans le mode de réalisation des figures, le berceau 3 comprend 2 dites premières butées 3b disposées sur des rebords 3a1 des dites premières rainures, de préférence des rebords avant 3a1 disposés du côté de la dite deuxième pièce, les dits rebords avant 3a1 entrainant la dite capsule en translation pour sortir la capsule du dit logement de capsule comme décrit ci-après.

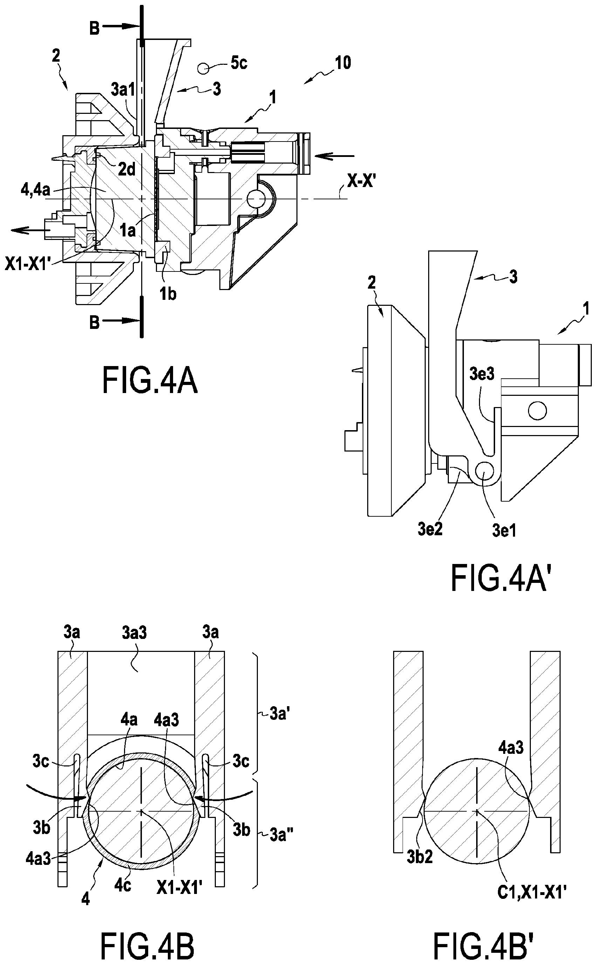

Sur les figures 1D, 2B-5B et 2C, le dispositif comprend des premières butées élastiques 3b constituées par des languettes flexibles découpées (avec un évidement 3c) dans les dits rebords longitudinaux 3a1 des dites premières rainures disposés du côté de la dite deuxième pièce, la forme desdites languettes comprenant un épaulement 3b1 apte à servir de surface d'appui supérieure de la butée 3b supportant une partie inférieure 4a2 de la paroi latérale 4a de la capsule après insertion de sa collerette 4c et coulissement par gravité de celle-ci dans les dites premières rainures en dite position initiale d'ouverture. Comme montré figure 2B, les dites parties inférieures 4a2 de la paroi latérale 4a de la capsule sont disposées sous l'axe X1X1' de la paroi latérale 4a.

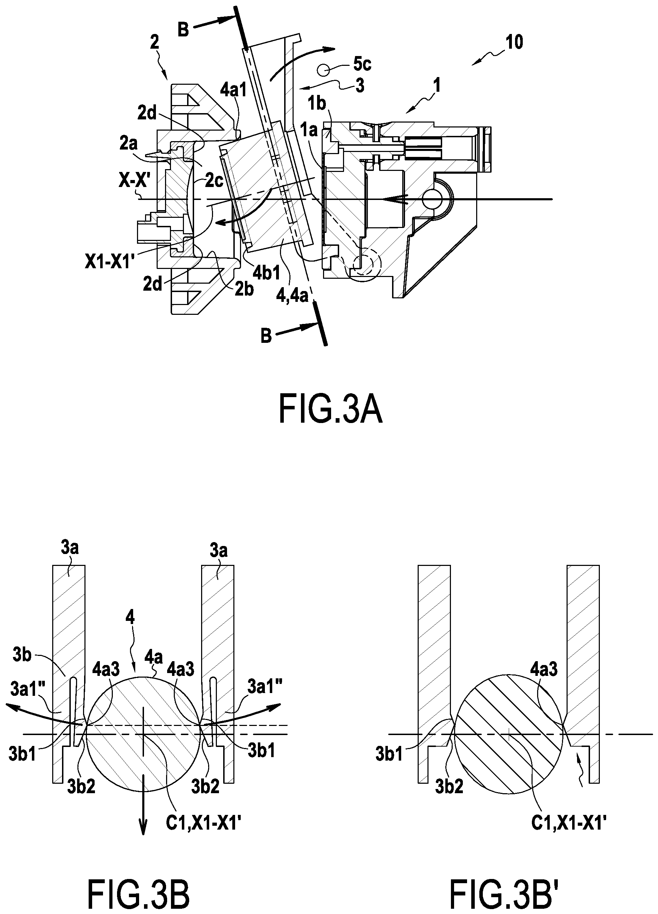

Comme montré figure 3B, les dites languettes 3b sont aptes à s'écarter l'une de l'autre sous l'effet d'une force appliquée sur la partie supérieure 4a3 de la paroi latérale de la dite capsule en position d'appui pour que la paroi latérale de la capsule se retrouve en dite zone inférieure 3a" des premières rainures en dite position de fermeture au sein du dit logement 2a de capsule comme explicité ci-après.

Plus particulièrement encore, à côté des languettes formant butée 3b, une partie 3a1" des rebords de premières rainures reste rigide pour retenir et entrainer la collerette lors de l'évacuation lors de la translation arrière d'évacuation de la capsule. L'évidement 3c entre les 2 parties rigides 3a1" et les 2 languettes 3b autorise la déformation des languettes pour laisser passer la paroi cylindrique de la capsule en gravité vers le bas lorsque lesdites languettes s'escamotent et s'écartent l'une de l'autre. A ce stade, les surfaces d'appui inférieures 3b2 des butées 3b en retournant à leur position initiale élastiquement exercent une poussée sur des parties supérieures 4a3 de la paroi latérale 4a rigide de la capsule placée par-dessous les butées 3b.

Dans une variante de réalisation montrée sur les figures 2B' à 4B', lorsque ladite paroi latérale de la capsule est semi rigide, lesdites premières butées 3b sont rigides non déformables ou non déplaçables. Dans ce cas, c'est la paroi latérale de la capsule qui est déformée élastiquement et peut passer au-delà de la butée rigide, sa section transversale circulaire s'ovalisant pour passer entre les deux butées rigides 3b. Puis, une fois passée dessous les dites premières butées rigides, la section ovalisée de la paroi latérale 4a de la capsule tend à reprendre sa forme circulaire par élasticité de sorte qu'une partie supérieure 4a3 de la dite paroi latérale de la capsule, au-dessus de l'axe X1X1', exerce une poussée vers le haut sur des surfaces d'appui inférieures 3b2 des dites premières butées rigides.

Dans un mode de réalisation, représenté sur les figures 1A,1B et 1C, ladite troisième pièce comporte un élément de guidage latéral 3g, de préférence un élément de guidage maie sous forme de doigt, apte à coopérer avec un élément de guidage complémentaire 5b2 dudit châssis, respectivement de préférence femelle sous forme de deuxièmes rainures de guidage et le dit châssis comporte une troisième butée rigide de blocage 5c positionnée derrière la dite troisième pièce en dite position d'ouverture, de sorte que :
- lors de ladite translation relative d'éloignement, depuis une dite deuxième position d'éloignement intermédiaire vers la dite position d'ouverture la dite troisième pièce vient en contact avec la dite troisième butée 5c, et la dite troisième pièce entrainée par ladite troisième butée pivote en sens inverse en dite position de première inclinaison, et
- lors de la dite translation relative de rapprochement, la dite troisième pièce s'éloigne du la dite troisième butée 5c.

On comprend que la dite troisième pièce reste en dite position de première inclinaison depuis une dite position d'ouverture vers une dite première position intermédiaire, du fait de son propre poids et le cas échéant stabilisé en dite première inclinaison de par le poids de la capsule.

Dans un mode de réalisation représenté figures 2C',4A' et 5A', la dite troisième pièce est fixée de manière articulée en rotation sur la dite première pièce et est entrainée automatiquement en rotation vers une dite première inclinaison en dite position d'ouverture et dite deuxième position intermédiaire du fait d'un ressort élastique 3e1 et de préférence aussi d'une quatrième butée 3e2.

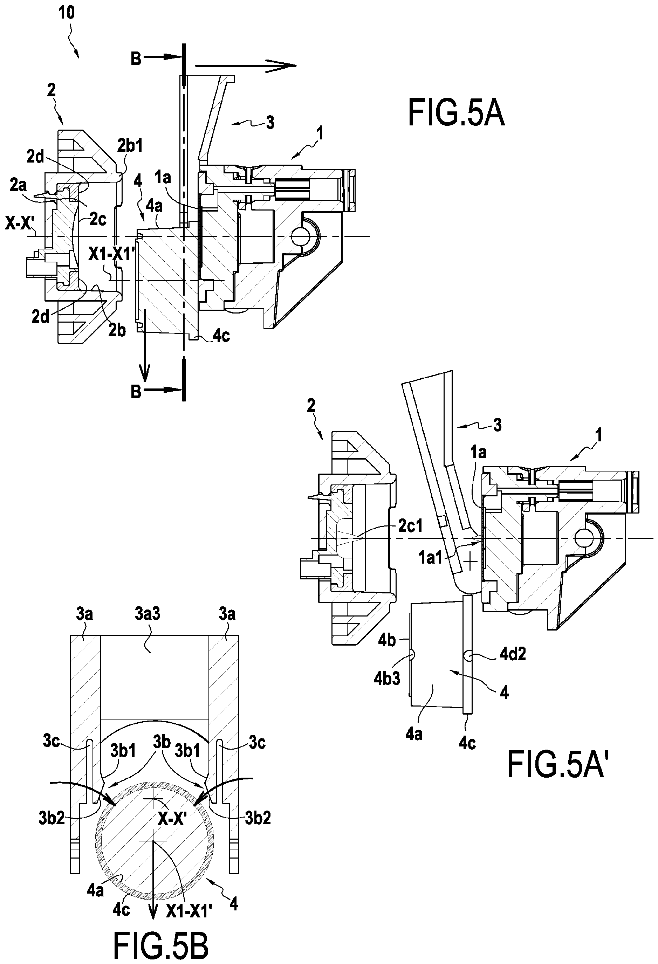

Plus particulièrement, le ressort 3e1 est enroulé autour de l'axe du berceau au niveau des chapes 3d et une quatrième butée 3e2 est disposée dessous le berceau en avant des rebords avant 3a1 pour limiter l'inclinaison à la dite valeur de dite première inclinaison. Puis, en sortie du logement 2a, après extraction, en dite deuxième position intermédiaire, le berceau reprend aussitôt sa dite position en première inclinaison comme montré figure 5A' et le ressort maintient berceau en dite première inclinaison jusqu'en dite première position intermédiaire de rapprochement. Sur la figure 5A', on a représenté un mode de réalisation dans lequel :
- la face avant a de la première pièce comprend un premier picot central 1a1 destiné à percer un opercule non percé de la capsule pour créer une perforation centrale dans ledit opercule en dite position de fermeture, et
- la paroi de fond b dudit logement comprend un deuxième picot central 2c1 destiné à percer une paroi de fond 4b d'une capsule non perforée pour créer une perforation centrale 4b3 dans celle-ci en dite position de fermeture. Un procédé d'utilisation d'un dispositif selon l'invention comprend les étapes successives suivantes :
   1- on insère par gravité une dite capsule dans les dites premières rainures d'un dit réceptacle de la dite troisième pièce inclinée en dite position d'éloignement maximal des deux première et deuxième pièces, ladite collerette 4c étant retenue dans les dites premières rainures (3a) par au moins une première dite butée 3b, puis
   2- on réalise une translation relative de rapprochement de la dite première pièce et de la dite troisième pièce par rapport à la dite deuxième pièce depuis ladite position initiale d'éloignement maximal jusqu'à une dite première position intermédiaire dans laquelle l'extrémité avant supérieure 2b1 de la paroi latérale de révolution 2b dudit logement de capsule 2a, arrive en contact contre une première partie supérieure 4a1 de la dite paroi latérale 4a de la capsule,
   3- on poursuit la dite translation relative de rapprochement de ladite première pièce et de la dite troisième pièce depuis une dite première position intermédiaire de rapprochement vers une dite position de rapprochement maximal, et l'extrémité avant supérieure 2b1 de la paroi latérale de révolution 2b dudit logement 2a de capsule, exerce une poussée contre la dite première partie supérieure 4a1 de la dite paroi latérale de la capsule, poussée qui se transmet sur ladite butée 3b ce qui provoque concomitamment d'une part le pivotement de la troisième pièce, depuis une dite première inclinaison vers une position verticale des premières rainures en dite position de rapprochement maximal, et d'autre part la déformation élastique de ladite première butée ou de la dite paroi latérale 4a de la capsule, de sorte que ladite capsule est déplacée en translation de haut en bas par rapport à la dite première butée vers une zone inférieure 3a" des dites premières rainures dans laquelle en dite position de fermeture, la face avant la de la dite première pièce est plaquée contre la collerette, et l'axe de révolution X1X1' de la dite paroi latérale de la capsule se trouve disposé co-axialement avec l'axe longitudinal XX' du dit logement 2a de capsule, et
   4- en dite position de fermeture, la face avant 1a,1b de la dite première pièce est plaquée contre la collerette 4c et de préférence une partie au moins de l'opercule 4d de la dite capsule et la paroi de fond 2c,2d dudit logement est plaquée contre la paroi de fond 4b, 4b1 de ladite capsule délimitant ainsi un compartiment étanche formant une chambre d'extraction avec la paroi latérale 4a de la capsule insérée dans le dit logement de capsule, et on réalise une injection 1i de liquide à travers des perforations 4d1 dudit opercule de ladite capsule et évacuation 2e dudit liquide à travers des perforations 4b1 de la paroi de fond de la dite capsule dans la dite chambre d'extraction, et
   5- on réalise une translation relative inverse d'éloignement de la dite première pièce et de la dite troisième pièce par rapport à la dite deuxième pièce depuis la dite position de fermeture vers une deuxième position intermédiaire d'éloignement, la dite capsule étant entraînée par la troisième pièce en translation relative inverse jusqu'à ce que la paroi latérale 4a de révolution de la capsule se retrouve entièrement en dehors du dit logement de capsule 2a en dite deuxième position intermédiaire d'éloignement, la dite troisième pièce ne pivotant pas et restant en position avec les dites premières rainures verticales, et
   6- la dite capsule n'étant plus retenue par la dite butée, est évacuée vers le bas en dehors des dites premières rainures par l'extrémité inférieure des dites premières rainures, en dite deuxième position intermédiaire d'éloignement, et
   7- on réalise le pivotement la dite troisième pièce depuis une position avec les dites premières rainures verticales vers une position avec dites premières rainures inclinées en poursuivant la dite translation vers ladite position d'ouverture.

## Revendications

1. Dispositif de préparation de boisson aromatisée (10), à base d'arômes, notamment de café, à partir d'une poudre contenue dans une capsule(4) rigide ou semi rigide présentant une paroi latérale de révolution (4a), de préférence cylindrique ou de préférence encore tronconique à section circulaire, fermée d'un côté par une paroi de fond (4b) perforée (4b2) ou apte à être perforée et de l'autre côté par un couvercle (4d) sous forme d'un film opercule perforé (4d1) ou apte à être perforé, le dit couvercle recouvrant une collerette (4c) formant un rebord périphérique annulaire plat autour d'une extrémité de la dite paroi latérale (4a), ledit dispositif comprenant:
- une première pièce (1) contenant des moyens d'amenée (1i) de liquide vers et à travers la face avant (1a) de la dite première pièce, et
- une deuxième pièce (2) contenant les moyens d'évacuation (2e) du dit liquide, la face avant (2a1) de la deuxième pièce (2) comprenant un logement de capsule (2a) apte à recevoir ladite paroi latérale (4a) de la capsule avec la paroi de fond (4b) de la dite capsule en appui contre la paroi de fond (2c,2d) du dit logement (2a), et
- des moyens de déplacement en translation relative (6) coaxiale desdites première pièce (1) et deuxième pièce (2) entre :
- (i) une position d'ouverture correspondant à un éloignement maximal des dites première et deuxième pièces, et
- (ii) une position de fermeture correspondant à un rapprochement maximal des dites première et deuxième pièces délimitant ainsi un compartiment étanche d'extraction avec la paroi latérale (4a) de la capsule contenue dans ledit logement (2a), et
- une troisième pièce (3) aussi dénommée berceau, formant un réceptacle de la capsule, apte à être positionnée entre une face avant (1a) de la première pièce et une face avant (2a1) de la deuxième pièce, ladite troisième pièce étant montée apte à pivoter par rapport à un axe transversal (YY') perpendiculaire à l'axe longitudinal (XX') de dite translation relative coaxiale, la dite troisième pièce (3) étant apte à être entrainée avec la dite première ou deuxième pièce lors d'une dite translation relative coaxiale,
**caractérisé en ce que** la dite troisième pièce comprend:
- (i.1) des éléments de guidage et maintien de la dite capsule, la dite paroi latérale de la capsule s'étendant en dehors des dits éléments de guidage et maintien (3a) du côté de la dite deuxième pièce avec l'axe (X1X1') de ladite paroi latérale de la capsule, positionné perpendiculaire à une direction longitudinale de guidage (Y1Y1') des dits éléments de guidage et maintien, et
- (i.2) au moins une première butée (3b), la dite capsule après insertion de la dite troisième pièce étant empêchée par la dite première butée de chuter par l'extrémité inférieure ouverte les dits éléments de guidage et maintien en dite position d'ouverture, du fait qu'au moins une partie (4a2) de la paroi latérale de la capsule est en contact avec la dite première butée en dite position d'ouverture, et
la dite troisième pièce (3) est apte à être entrainée en translation et à pivoter lors des étapes a) à c) suivantes, de telle sorte que :
a) lors d'une dite translation relative coaxiale de rapprochement de ladite première pièce et de la dite deuxième pièce, depuis la dite position d'ouverture jusqu'à une première position intermédiaire de rapprochement, la dite troisième pièce et l'axe de révolution (X1X1') de la dite paroi latérale (4a) de la capsule retenue par ladite butée se trouvent inclinées selon une première inclinaison (α1), et en dite première position intermédiaire, une première partie (4a1) de la dite paroi latérale de la capsule arrive en contact contre une deuxième butée (2b1) de préférence au niveau de la face avant de ladite deuxième pièce, et
b) lors de la poursuite dite translation relative coaxiale de rapprochement de ladite première pièce et de la dite deuxième pièce depuis une dite première position intermédiaire vers une dite position de fermeture, la dite deuxième butée (2b1) exerce une poussée contre la dite première partie (4a1) de la dite paroi latérale de la capsule, ladite poussée se transmettant sur ladite première butée (3b) ce qui provoque concomitamment d'une part le pivotement de la troisième pièce, depuis une dite première inclinaison vers une position dans laquelle la dite direction longitudinale (Y1Y1') des éléments de guidage est perpendiculaire à la direction de dite translation relative coaxiale des dites première et deuxième pièces en dite position de fermeture, et d'autre part une déformation élastique de ladite première butée (3b) ou de la dite paroi latérale (4a) de la capsule de sorte que ladite capsule est déplacée en translation par rapport à la dite première butée en pivotant jusqu'à ce que l'axe de révolution (X1X1') de la dite paroi latérale de la capsule se trouve disposé co-axialement avec l'axe longitudinal (XX') du dit logement de capsule en dite position de fermeture, et
c) lors d'une dite translation relative coaxiale inverse d'éloignement depuis la dite position de fermeture vers une deuxième position intermédiaire d'éloignement, la dite capsule est entrainée en translation relative coaxiale jusqu'à ce que la paroi latérale (4a) de révolution de la capsule se retrouve entièrement en dehors du dit logement de capsule (2a), la dite capsule, n'étant plus retenue par la dite première butée , étant apte à être évacuée vers le bas en dehors de la dite troisième pièce en dite deuxième position intermédiaire d'éloignement.

2. Dispositif selon la revendication 1 **caractérisé en ce que** la dite troisième pièce (3) est apte à être entrainée avec la dite première pièce lors d'une dite translation relative coaxiale et la dite troisième pièce comprend:
- (i) des éléments de guidage et maintien de la dite capsule comprenant deux premières rainures (3a) en vis à vis aptes à d'une part recevoir et guider en translation de haut en bas ladite collerette, avec deux côtés latéraux diamétralement opposés de ladite collerette dans et entre lesdites premières rainures, et d'autre part aptes à supporter une face (4c2) de la dite collerette en vis à vis de la dite deuxième pièce lorsque ladite troisième pièce est dans une position inclinée selon une première inclinaison, et
- (ii) au moins une dite première butée (3b) disposée au niveau des dites premières rainures, au moins une partie inférieure (4a2) de la paroi latérale de la capsule reposant sur la dite première butée en dite position d'ouverture, et
la dite troisième pièce (3) est apte à être entrainée en translation et à pivoter lors des étapes a) à c) suivantes, de telle sorte que
- à l'étape a), en dite première position intermédiaire de rapprochement, la partie la plus basse (4b2) de la dite paroi de fond (4b) est plus basse que la partie la plus basse de la dite collerette (4c), et en dite première position intermédiaire, une première partie supérieure (4a1) de la dite paroi latérale de la capsule arrive en contact contre la face avant de ladite deuxième pièce au niveau d'une extrémité avant supérieure (2b1) de la paroi latérale de révolution (2b) dudit logement (2a) de capsule formant la dite deuxième butée, et
- à l'étape b), l'extrémité avant supérieure (2b1) de la paroi latérale de révolution (2b) dudit logement (2a) de capsule, exerce une poussée contre la dite première partie supérieure (4a1) de la dite paroi latérale de la capsule, ladite poussée se transmettant sur ladite première butée (3b) ce qui provoque concomitamment d'une part le pivotement de la troisième pièce, depuis une dite première inclinaison vers une position verticale des premières rainures en dite position de fermeture et d'autre part une déformation élastique de ladite butée ou de la dite paroi latérale (4a) de la capsule de sorte que ladite capsule est déplacée en translation de haut en bas par rapport à la dite première butée vers une zone inférieure (3a") des dites premières rainures, et
- à l'étape c), la dite troisième pièce ne pivote pas et reste en position avec les dites premières rainures verticales, et la dite capsule est entrainée par la troisième pièce en translation relative inverse jusqu'à ce que la dite capsule, n'étant plus retenue par la dite première butée, puisse être évacuée vers le bas en dehors des dites premières rainures en dite deuxième position intermédiaire d'éloignement.

3. Dispositif selon la revendication 1 ou 2 adapté à une capsule de paroi latérale (4a) rigide, **caractérisé en ce que** ladite première butée est une butée élastique apte à se déformer sous l'effet d'une force appliquée contre et par-dessus la dite paroi latérale (4a) de la capsule reposant sur la dite première première butée élastique de sorte que d'une part à l'étape b) ladite butée élastique est escamotée par la dite capsule et la dite paroi latérale de la capsule est déplacée dessous la dite première butée, et d'autre part à l'étape c) ladite première butée élastique exerce une poussée vers le bas sur une deuxième partie supérieure (4a3) de la dite paroi latérale de la capsule qui peut être évacuée vers le bas en dehors des dites premières rainures en dite deuxième position intermédiaire d'éloignement sans nécessiter un autre éjecteur.

4. Dispositif selon la revendication 1 ou 2 adapté à une capsule de paroi latérale (4a) semi rigide déformable élastiquement, **caractérisé en ce que** ladite première butée est une butée rigide non déformable et non déplaçable, de sorte que d'une part à l'étape b) la paroi latérale de la capsule est déformée élastiquement et la dite paroi latérale de la capsule est déplacée dessous la dite première butée, et d'autre part à l'étape c) une deuxième partie supérieure (4a3) de la dite paroi latérale de la capsule déplacée dessous la dite première butée exerce une poussée vers le haut sur la dite première butée rigide et la capsule peut être évacuée vers le bas en dehors des dites premières rainures en dite deuxième position intermédiaire d'éloignement sans nécessiter un autre éjecteur.

5. Dispositif selon l'une des revendications 2 à 4, **caractérisé en ce que** ladite troisième pièce comprend des dites premières rainures comprenant :
- une zone supérieure (3a') dans laquelle les dites premières rainures sont aptes à, retenir la dite collerette sur ses deux faces (4c1, 4c2) lors d'une dite translation relative coaxiale depuis ladite position d'ouverture vers la dite première position intermédiaire, et
- une zone inférieure (3a") dans laquelle, en dite position de fermeture, une partie périphérique (1b) de la face avant de ladite première pièce est apte à venir en appui contact contre une face (4c1) de la dite collerette en dehors dudit logement, l'autre face (4c2) de la dite collerette étant en appui sur les dites premières rainures et apte à entrainer la capsule en dite translation relative inverse d'éloignement vers une dite deuxième position intermédiaire à l'étape b); et
- la dite première butée (3b) au niveau de ladite zone inférieure (3a") desdites premières rainures, apte à retenir la dite paroi latérale de la capsule reposant sur une surface d'appui supérieure (3b1) de la dite première butée.

6. Dispositif selon l'une des revendications 1 à 5, **caractérisé en ce qu'**un châssis (5) supporte au moins les dites première pièce et deuxième pièce et les dits moyens de translation relative, ladite troisième pièce étant montée à pivotement sur le dit châssis commun (1-3) supportant les trois pièces ou solidaire d'une des deux première et deuxième pièces, et lors d'une dite translation relative des deux première et deuxième pièces, la dite deuxième pièce est solidaire du dit châssis de manière immobile par rapport à celui-ci, et la dite première pièce est mobile en translation relative par rapport au châssis et la dite deuxième pièce.

7. Dispositif selon la revendication 6 **caractérisé en ce que** ladite troisième pièce comporte un élément de guidage latéral (3g), de préférence un élément de guidage maie sous forme de doigt, apte à coopérer avec un élément de guidage complémentaire (5b2) dudit châssis, respectivement de préférence femelle sous forme de deuxièmes rainures de guidage et le dit châssis comporte une troisième butée rigide de blocage (5c) positionnée derrière la dite troisième pièce en dite position d'ouverture, de sorte que:
- lors de ladite translation relative d'éloignement, depuis une dite deuxième position d'éloignement intermédiaire vers la dite position d'ouverture la dite troisième pièce vient en contact avec la dite troisième butée (5c), et la dite troisième pièce entrainée par ladite troisième butée pivote en sens inverse en dite position de première inclinaison, et
- lors de la dite translation relative de rapprochement, la dite troisième pièce s'éloigne de la dite troisième butée (5c).

8. Dispositif selon l'une des revendications 1 à 7, **caractérisé en ce que** la dite troisième pièce est fixée de manière articulée en rotation sur la dite première pièce et est entrainée automatiquement en rotation vers une dite première inclinaison en dite position d'ouverture et dite deuxième position intermédiaire du fait d'un ressort élastique (3e1) et de préférence aussi d'une quatrième butée (3e2).

9. Dispositif selon l'une des revendications 1 à 8, **caractérisé en ce que** la dite troisième pièce est articulée en rotation autour d'un axe de rotation (Y2Y2') perpendiculaire à l'axe (XX') du dit logement de capsule (2a) situé dessous le niveau dudit logement de capsule (2a) et de préférence situé dessous la partie (1b) face avant de la première pièce apte à venir en appui contre la dite collerette (4c) et de préférence encore en retrait par rapport à la face avant de la première pièce et solidaire de la dite première pièce.

10. Dispositif selon l'une des revendications 1 à 9 **caractérisé en ce que**:
- la face avant de la première pièce comprend un premier joint périphérique d'étanchéité (1b) apte à venir se plaquer sur tout le pourtour de ladite collerette (4c) de la capsule en dite position d'ouverture des deux première et deuxième pièces, et
- le dit logement de capsule (2a) est délimité par une paroi latérale cylindrique (2b) et comprend une paroi de fond (2c) bordée par un deuxième joint périphérique d'étanchéité (2d) contre lequel la périphérie de la paroi de fond (4b) de la dite capsule est apte à venir en appui en dite position de fermeture des deux première et deuxième pièces, et
- de préférence, la face avant de la première pièce comprend une première plaque perforée apte à diffuser le liquide sous pression à travers les perforations dudit opercule de la capsule, la dite première plaque perforée étant bordée par le dit premier joint (1b).

11. Dispositif selon l'une des revendications 2 à 10, **caractérisé en ce qu'**il comprend deux dites premières butées (3b) de préférence disposées respectivement sur chacune des dites premières rainures en vis à vis l'une de l'autre.

12. Dispositif selon la revendication 11, **caractérisé en ce que** le berceau (3) comprend 2 dites premières butées (3b) disposées sur des rebords (3a1) de dites premières rainures, de préférence des rebords avant (3a1) disposés du côté de la dite deuxième pièce, les dits rebords avant entrainant la dite capsule en translation pour sortir la capsule du dit logement de capsule.

13. Dispositif selon l'une des revendications 1 à 12 caractérisé en qu'il comporte:
a- une dite première pièce apte à être déplacée en translation par rapport à un châssis (5) supportant les dites première et deuxième pièces à l'aide desdits moyens de déplacement en translation relative (6), et
b- une dite deuxième pièce qui reste fixe par rapport audit châssis et n'est pas apte à être déplacée en translation à l'aide desdits moyens de déplacement en translation relative, et
c- une dite troisième pièce montée à pivotement sur le dit châssis commun supportant les trois pièces, la dite troisième pièce étant solidaire de la dite première pièce en dite translation relative, ladite première pièce comprenant des premiers éléments de guidage en translation (1d) coopérant en translation relative avec des premiers éléments de guidage complémentaires (5bl) solidaires d'un flanc (5a) dudit châssis.

14. Procédé d'utilisation d'un dispositif selon l'une des revendications 1 à 12, **caractérisé en ce qu'**on réalise les étapes successives suivantes :
1- on insère par gravité une dite capsule dans les dits premiers éléments de guidage et de maintien (3a) d'un dit réceptacle de la dite troisième pièce inclinée en dite position d'ouverture, ladite capsule (4) étant retenue par au moins une dite première butée (3b), puis
2- on réalise une translation relative de rapprochement de la dite première pièce et de la dite troisième pièce par rapport à la dite deuxième pièce depuis ladite position initiale d'ouverture jusqu'à une dite première position intermédiaire dans laquelle une dite deuxième butée (2b1) arrive en contact contre une première partie (4a1) de la dite paroi latérale (4a) de la capsule,
3- on poursuit la dite translation relative de rapprochement de ladite première pièce et de la dite troisième pièce depuis une dite première position intermédiaire de rapprochement vers une dite position de fermeture, et la dite deuxième butée exerce une poussée contre la dite première partie (4a1) de la dite paroi latérale de la capsule, poussée qui se transmet sur ladite première butée (3b) ce qui provoque concomitamment d'une part le pivotement de la troisième pièce et de ladite capsule depuis une dite première inclinaison vers une position dans laquelle la dite direction longitudinale (Y1Y1') des éléments de guidage est perpendiculaire à la direction de dite translation relative coaxiale des dites première et deuxième pièces en dite position de fermeture, et d'autre part la déformation élastique de ladite butée ou de la dite la capsule, de sorte que ladite capsule est déplacée en translation par rapport à la dite première butée et l'axe de révolution (X1X1') de la dite paroi latérale de la capsule pivote pour se positionner co-axialement avec l'axe longitudinal (XX') du dit logement de capsule en dite position de fermeture, et
4- en dite position de fermeture, d'une part la face avant (1a,1b) de la dite première pièce est plaquée contre la collerette (4c) et de préférence une partie au moins de l'opercule (4d) de la dite capsule et d'autre part la paroi de fond (2c,2d) dudit logement est plaquée contre la paroi de fond (4b,4b1) de la dite capsule, délimitant ainsi un compartiment étanche formant une chambre d'extraction avec la paroi latérale (4a) de la capsule insérée dans le dit logement de capsule, et on réalise une injection (1i) de liquide à travers une ou des perforations (4d1,4d2) dudit opercule de ladite capsule avec évacuation (2e) dudit liquide à travers des perforations (4b2, 4b3) de la paroi de fond de la dite capsule dans la dite chambre d'extraction, et
5- on réalise une translation relative coaxiale inverse d'éloignement de la dite première pièce et de la dite troisième pièce par rapport à la dite deuxième pièce depuis la dite position de fermeture vers une deuxième position intermédiaire d'éloignement, la dite capsule étant entrainée en translation relative inverse jusqu'à ce que la paroi latérale (4a) de révolution de la capsule se retrouve entièrement en dehors du dit logement de capsule (2a) en dite deuxième position intermédiaire d'éloignement, et
6- en dite deuxième position intermédiaire d'éloignement, la dite capsule n'étant plus retenue par la dite première butée, est évacuée vers le bas en dehors par l'extrémité inférieure ouverte de ladite troisième pièce, et
7- on réalise le pivotement la dite troisième pièce depuis une position avec les dites premières rainures verticales vers une position avec dites premières rainures inclinées en poursuivant la dite translation vers ladite position d'ouverture.

## Patentansprüche

1. Vorrichtung zur Zubereitung eines aromatisierten Getränks (10) auf der Grundlage von Aromen, besonders Kaffee, aus einem Pulver, das in einer Hartkapsel oder einer halbharten Kapsel (4) enthalten ist, die eine umlaufende Seitenwand (4a), vorzugsweise zylindrisch oder vorzugsweiser kegelstumpfförmig mit einem kreisförmigen Querschnitt, aufweist, die auf einer Seite durch eine Bodenwand (4b), die perforiert (4b2) ist oder geeignet ist, perforiert zu sein, und auf der anderen Seite durch einen Deckel (4d) in Form eines Verschlussfilms, der perforiert (4d1) ist oder geeignet ist, perforiert zu sein, verschlossen ist, wobei der Deckel einen Kragen (4c) abdeckt, der einen flachen ringförmigen Umfangsrand um ein Ende der Seitenwand (4a) bildet, wobei die Vorrichtung umfasst:
- ein erstes Teil (1), das Zuführmittel (1i) für Flüssigkeit zu der und über die vordere Fläche (1a) des ersten Teils enthält, und
- ein zweites Teil (2), das Ableitungsmittel (2e) für die Flüssigkeit enthält, wobei die vordere Fläche (2a1) des zweiten Teils (2) eine Kapselaufnahme (2a) umfasst, die geeignet ist, die Seitenwand (4a) der Kapsel aufzunehmen, wobei die Bodenwand (4b) der Kapsel an der Bodenwand (2c,2d) der Aufnahme (2a) aufliegt, und
- Mittel zur relativen koaxialen Verschiebung (6) des ersten Teils (1) und des zweiten Teils (2) zwischen:
- (i) einer Öffnungsposition, die einer maximalen Trennung des ersten und zweiten Teils entspricht, und
- (ii) einer Verschlussposition, die einer maximalen Annäherung des ersten und zweiten Teils entspricht, wodurch eine dichte Extraktionskammer mit der Seitenwand (4a) der Kapsel begrenzt wird, die in der Aufnahme (2a) enthalten ist, und
- ein drittes Teil (3), auch Halterung genannt, das einen Aufnahmebehälter der Kapsel bildet und geeignet ist, zwischen einer vorderen Fläche (1a) des ersten Teils und einer vorderen Fläche (2a1) des zweiten Teils positioniert zu werden, wobei das dritte Teil, wenn es montiert ist, geeignet ist, in Bezug auf eine Querachse (YY') zu schwenken, die zu der Längsachse (XX') der relativen koaxialen Verschiebung senkrecht verläuft, wobei das dritte Teil (3) geeignet ist, von dem ersten oder zweiten Teil bei einer solchen relativen koaxialen Verschiebung mitgeführt zu werden,
**dadurch gekennzeichnet, dass** das dritte Teil umfasst:
- (i.1) Führungs- und Halteelemente für die Kapsel, wobei sich die Seitenwand der Kapsel auf der Seite des zweiten Teils außerhalb der Führungs- und Halteelemente (3a) erstreckt, wobei die Achse (X1X1') der Seitenwand der Kapsel senkrecht zu einer Längsrichtung (Y1Y1') der Führung der Führungs- und Halteelemente positioniert ist, und
- (i.2) mindestens einen ersten Anschlag (3b), wobei die Kapsel nach dem Einsetzen des dritten Teils durch den ersten Anschlag daran gehindert wird, in der Öffnungsposition von dem offenen unteren Ende der Führungs- und Halteelemente zu fallen, da mindestens ein Abschnitt (4a2) der Seitenwand der Kapsel in der Öffnungsposition mit dem ersten Anschlag in Kontakt steht, und
wobei das dritte Teil (3) geeignet ist, in den folgenden Schritten a) bis c) verschoben und geschwenkt zu werden, sodass:
a) bei einer relativen koaxialen Verschiebung zur Annäherung des ersten Teils und des zweiten Teils, von der Öffnungsposition bis zu einer ersten dazwischenliegenden Annäherungsposition, das dritte Teil und die Drehachse (X1X1') der Seitenwand (4a) der Kapsel, die durch den Anschlag zurückgehalten wird, gemäß einer ersten Neigung (α1) geneigt sind, und in der ersten dazwischenliegenden Position ein erster Abschnitt (4a1) der Seitenwand der Kapsel vorzugsweise auf Höhe der vorderen Fläche des zweiten Teils mit einem zweiten Anschlag (2b1) in Kontakt kommt, und
b) bei der Fortsetzung der relativen koaxialen Verschiebung zur Annäherung des ersten Teils und des zweiten Teils von einer ersten dazwischenliegenden Position in eine Verschlussposition der zweite Anschlag (2b1) einen Druck auf den ersten Abschnitt (4a1) der Seitenwand der Kapsel ausübt, wobei sich der Druck auf den ersten Anschlag (3b) überträgt, was gleichzeitig einerseits das Schwenken des dritten Teils von einer ersten Neigung in eine Position, in der die Längsrichtung (Y1Y1') der Führungselemente zu der Richtung der relativen koaxialen Verschiebung des ersten und zweiten Teils in die Verschlussposition senkrecht verläuft, und andererseits eine elastische Verformung des ersten Anschlags (3b) oder der Seitenwand (4a) der Kapsel bewirkt, sodass die Kapsel in Bezug auf den ersten Anschlag verschoben wird, indem sie so lange schwenkt, bis die Drehachse (X1X1') der Seitenwand der Kapsel in der Verschlussposition koaxial zu der Längsachse (XX') der Aufnahme der Kapsel angeordnet ist, und
c) bei einer umgekehrten relativen koaxialen Verschiebung zur Trennung von der Verschlussposition in eine zweite dazwischenliegende Trennungsposition die Kapsel relativ koaxial verschoben wird, bis sich die umlaufende Seitenwand (4a) der Kapsel vollständig außerhalb der Aufnahme (2a) der Kapsel befindet, wobei die Kapsel, wenn sie nicht mehr durch den ersten Anschlag zurückgehalten wird, geeignet ist, nach unten außerhalb des dritten Teils in die zweite dazwischenliegende Trennungsposition abgeführt zu werden.

2. Vorrichtung nach Anspruch 1, **dadurch gekennzeichnet, dass** das dritte Teil (3) geeignet ist, bei einer relativen koaxialen Verschiebung mit dem ersten Teil mitgeführt zu werden, und dass das dritte Teil umfasst:
- (i) Führungs- und Halteelemente für die Kapsel, umfassend zwei erste gegenüberliegende Nuten (3a), die einerseits geeignet sind, den Kragen aufzunehmen und bei der Verschiebung von oben nach unten zu führen, wobei sich zwei diametral gegenüberliegende Seitenflächen des Kragens in und zwischen den ersten Nuten befinden, und andererseits geeignet sind, eine Fläche (4c2) des Kragens gegenüber dem zweiten Teil zu stützen, wenn sich das dritte Teil gemäß einer ersten Neigung in einer geneigten Position befindet, und
- (ii) mindestens einen ersten Anschlag (3b), der auf Höhe der ersten Nuten angeordnet ist, wobei zumindest ein unterer Abschnitt (4a2) der Seitenwand der Kapsel in der Öffnungsposition auf dem ersten Anschlag aufliegt, und
wobei das dritte Teil (3) geeignet ist, in den folgenden Schritten a) bis c) verschoben und geschwenkt zu werden, sodass
- in Schritt a) in der ersten dazwischenliegenden Annäherungsposition der unterste Abschnitt (4b2) der Bodenwand (4b) niedriger ist als der unterste Abschnitt des Kragens (4c), und in der ersten dazwischenliegenden Position ein erster oberer Abschnitt (4a1) der Seitenwand der Kapsel mit der vorderen Fläche des zweiten Teils auf Höhe eines vorderen oberen Endes (2b1) der umlaufenden Seitenwand (2b) der Aufnahme (2a) der Kapsel in Kontakt kommt, die den zweiten Anschlag bildet, und
- in Schritt b) das vordere obere Ende (2b1) der umlaufenden Seitenwand (2b) der Aufnahme (2a) der Kapsel einen Druck auf den ersten oberen Abschnitt (4a1) der Seitenwand der Kapsel ausübt, wobei sich der Druck auf den ersten Anschlag (3b) überträgt, was gleichzeitig einerseits das Schwenken des dritten Teils von einer ersten Neigung in eine vertikale Position der ersten Nuten in der Verschlussposition, und andererseits eine elastische Verformung des ersten Anschlags (3b) oder der Seitenwand (4a) der Kapsel bewirkt, sodass die Kapsel in Bezug auf den ersten Anschlag von oben nach unten in einen unteren Bereich (3a") der ersten Nuten verschoben wird, und
- in Schritt c) das dritte Teil nicht schwenkt und mit den ersten vertikalen Nuten in seiner Position bleibt, und die Kapsel von dem dritten Teil relativ umgekehrt verschoben wird, bis die Kapsel, die nicht mehr durch den ersten Anschlag zurückgehalten wird, nach unten außerhalb der ersten Nuten in die zweite dazwischenliegende Trennungsposition abgeführt werden kann.

3. Vorrichtung nach Anspruch 1 oder 2, die an eine Kapsel mit einer harten Seitenwand (4a) angepasst ist, **dadurch gekennzeichnet, dass** der erste Anschlag ein elastischer Anschlag ist, der geeignet ist, sich unter der Einwirkung einer Kraft zu verformen, die auf und über die Seitenwand (4a) der Kapsel angewendet wird, die auf dem ersten elastischen Anschlag aufliegt, sodass einerseits in Schritt b) der elastische Anschlag durch die Kapsel versenkt ist und die Seitenwand der Kapsel unter den ersten Anschlag verschoben ist, und andererseits in Schritt c) der erste elastische Anschlag einen Druck nach unten auf einen zweiten oberen Abschnitt (4a3) der Seitenwand der Kapsel ausübt, die nach unten außerhalb der ersten Nuten in die zweite dazwischenliegende Trennungsposition abgeführt werden kann, ohne dass eine andere Ausstoßvorrichtung erforderlich ist.

4. Vorrichtung nach Anspruch 1 oder 2, die an eine Kapsel mit einer halbharten elastisch verformbaren Seitenwand (4a) angepasst ist, **dadurch gekennzeichnet, dass** der erste Anschlag ein harter nicht verformbarer und nicht verschiebbarer Anschlag ist, sodass einerseits in Schritt b) die Seitenwand der Kapsel elastisch verformt wird und die Seitenwand der Kapsel unter den ersten Anschlag verschoben wird, und andererseits in Schritt c) ein zweiter oberer Abschnitt (4a3) der Seitenwand der Kapsel, die unter den ersten Anschlag verschoben ist, einen Druck nach oben auf den ersten harten Anschlag ausübt und die Kapsel nach unten außerhalb der ersten Nuten in die zweite dazwischenliegende Trennungsposition abgeführt werden kann, ohne dass eine andere Ausstoßvorrichtung erforderlich ist.

5. Vorrichtung nach einem der Ansprüche 2 bis 4, **dadurch gekennzeichnet, dass** das dritte Teil die ersten Nuten umfasst, umfassend:
- einen oberen Bereich (3a'), in dem die ersten Nuten geeignet sind, den Kragen bei einer relativen koaxialen Verschiebung von der Öffnungsposition in die erste dazwischenliegende Position an seinen beiden Flächen (4c1, 4c2) zurückzuhalten, und
- einen unteren Bereich (3a"), in dem in der Verschlussposition ein Umfangsabschnitt (1b) der vorderen Fläche des ersten Teils geeignet ist, auf einer Fläche (4c1) des Kragens außerhalb der Aufnahme aufzuliegen, wobei die andere Fläche (4c2) des Kragens auf den ersten Nuten aufliegt und geeignet ist, in Schritt b) die Kapsel bei der umgekehrten relativen Verschiebung zur Trennung in eine zweite dazwischenliegende Trennungsposition mitzuführen, und
- den ersten Anschlag (3b) auf Höhe des unteren Bereichs (3a") der ersten Nuten, der geeignet ist, die Seitenwand der Kapsel zurückzuhalten, die auf einer oberen Auflagefläche (3b1) des ersten Anschlags aufliegt.

6. Vorrichtung nach einem der Ansprüche 1 bis 5, **dadurch gekennzeichnet, dass** ein Rahmen (5) zumindest das erste Teil und das zweite Teil und die Mittel zur relativen Verschiebung stützt, wobei das dritte Teil schwenkbar an dem gemeinsamen Rahmen (1-3) montiert ist, der die drei Teile stützt oder mit einem des ersten und zweiten Teils fest verbunden ist, und bei einer relativen Verschiebung des ersten und zweiten Teils das zweite Teil mit dem Rahmen in Bezug darauf unbeweglich fest verbunden ist, und das erste Teil bei einer relativen Verschiebung in Bezug auf den Rahmen und das zweite Teil beweglich ist.

7. Vorrichtung nach Anspruch 6, **dadurch gekennzeichnet, dass** das dritte Teil ein seitliches Führungselement (3g), vorzugsweise ein männliches Führungselement in Form eines Fingers, umfasst, das geeignet ist, mit einem komplementären Führungselement (5b2) des Rahmens, jeweils vorzugsweise weiblich in Form von zweiten Führungsnuten, zusammenzuwirken, und der Rahmen einen dritten harten Blockieranschlag (5c) umfasst, der in der Öffnungsposition hinter dem dritten Teil positioniert ist, sodass:
- bei der relativen Verschiebung zur Trennung von einer zweiten dazwischenliegenden Trennungsposition in die Öffnungsposition das dritte Teil mit dem dritten Anschlag (5c) in Kontakt kommt, und das durch den dritten Anschlag mitgeführte dritte Teil in die Gegenrichtung in die Position der ersten Neigung schwenkt, und
- sich bei der relativen Verschiebung zur Annäherung das dritte Teil von dem dritten Anschlag (5c) entfernt.

8. Vorrichtung nach einem der Ansprüche 1 bis 7, **dadurch gekennzeichnet, dass** das dritte Teil drehbar angelenkt an dem ersten Teil fixiert ist und aufgrund einer elastischen Feder (3e1) und vorzugsweise auch eines vierten Anschlags (3e2) automatisch drehbar in eine erste Neigung in der Öffnungsposition und der zweiten dazwischenliegenden Position mitgeführt wird.

9. Vorrichtung nach einem der Ansprüche 1 bis 8, **dadurch gekennzeichnet, dass** das dritte Teil um eine Drehachse (Y2Y2') senkrecht zu der Achse (XX') der Aufnahme (2a) der Kapsel, die sich unter der Aufnahme (2a) der Kapsel befindet und sich vorzugsweise unter dem Abschnitt (1b) der vorderen Fläche des ersten Teils befindet, das geeignet ist auf dem Kragen (4c) aufzuliegen und vorzugsweiser in Bezug auf die vordere Fläche des ersten Teils eingefahren und mit dem ersten Teil fest verbunden ist, drehbar angelenkt ist.

10. Vorrichtung nach einem der Ansprüche 1 bis 9, **dadurch gekennzeichnet, dass**:
- die vordere Fläche des ersten Teils eine erste umlaufende Dichtung (1b) umfasst, die geeignet ist, sich in der Öffnungsposition des ersten und zweiten Teils auf den gesamten Umfang des Kragens (4c) der Kapsel zu pressen, und
- die Aufnahme (2a) der Kapsel durch eine zylindrische Seitenwand (2b) begrenzt ist und eine Bodenwand (2c) umfasst, die von einer zweiten umlaufenden Dichtung (2d) umsäumt wird, auf der der Umfang der Bodenwand (4b) der Kapsel in der Verschlussposition des ersten und zweiten Teils aufliegen kann, und
- vorzugsweise die vordere Fläche des ersten Teils eine erste perforierte Platte umfasst, die geeignet ist, die Flüssigkeit unter Druck durch die Perforationen des Verschlusses der Kapsel zu verteilen, wobei die erste perforierte Platte von der ersten Dichtung (1b) umsäumt wird.

11. Vorrichtung nach einem der Ansprüche 2 bis 10, **dadurch gekennzeichnet, dass** sie zwei erste Anschläge (3b) umfasst, die vorzugsweise jeweils auf jeder der ersten Nuten gegenüber voneinander angeordnet sind.

12. Vorrichtung nach Anspruch 11, **dadurch gekennzeichnet, dass** der Einschub (3) 2 erste Anschläge (3b) umfasst, die an den Rändern (3a1) der ersten Nuten, vorzugsweise den vorderen Rändern (3a1), angeordnet sind, die auf der Seite des zweiten Teils angeordnet sind, wobei die vorderen Ränder die Kapsel verschieben, um die Kapsel aus der Aufnahme der Kapsel herauszudrücken.

13. Vorrichtung nach einem der Ansprüche 1 bis 12, **dadurch gekennzeichnet, dass** sie umfasst:
a- ein erstes Teil, das geeignet ist, in Bezug auf einen Rahmen (5), der das erste und zweite Teil stützt, mithilfe der Mittel zur relativen Verschiebung (6) verschoben zu werden, und
b- ein zweites Teil, das in Bezug auf den Rahmen fest bleibt und nicht geeignet ist, mithilfe der Mittel zur relativen Verschiebung verschoben zu werden, und
c- ein drittes Teil, das schwenkbar an dem gemeinsamen Rahmen montiert ist, der die drei Teile stützt, wobei das dritte Teil mit dem ersten Teil bei der relativen Verschiebung fest verbunden ist, wobei das erste Teil erste Führungselemente (1d) für die Verschiebung umfasst, die bei der relativen Verschiebung mit ersten komplementären Führungselementen (5b1) zusammenwirken, die mit einem Flansch (5a) des Rahmens fest verbunden sind.

14. Verfahren zur Verwendung einer Vorrichtung nach einem der Ansprüche 1 bis 12, **dadurch gekennzeichnet, dass** die folgenden aufeinanderfolgenden Schritte ausgeführt werden:
1- Einsetzen einer Kapsel in die ersten Führungs- und Halteelemente (3a) eines Aufnahmebehälters des dritten geneigten Teils in der Öffnungsposition durch die Schwerkraft, wobei die Kapsel (4) durch mindestens einen ersten Anschlag (3b) zurückgehalten wird, dann
2- Ausführen einer relativen Verschiebung zur Annäherung des ersten Teils und des dritten Teils in Bezug auf das zweite Teil von der ursprünglichen Öffnungsposition bis zu einer ersten dazwischenliegenden Position, in der ein zweiter Anschlag (2b1) mit einem ersten Abschnitt (4a1) der Seitenwand (4a) der Kapsel in Kontakt kommt,
3- Fortsetzen der relativen Verschiebung zur Annäherung des ersten Teils und des dritten Teils von einer ersten dazwischenliegenden Annäherungsposition in eine Verschlussposition, und der zweite Anschlag übt einen Druck auf den ersten Abschnitt (4a1) der Seitenwand der Kapsel aus, wobei sich der Druck auf den ersten Anschlag (3b) überträgt, was gleichzeitig einerseits das Schwenken des dritten Teils und der Kapsel von einer ersten Neigung in eine Position, in der die Längsrichtung (Y1Y1') der Führungselemente zu der Richtung der relativen koaxialen Verschiebung des ersten und zweiten Teils in die Verschlussposition senkrecht verläuft, und andererseits die elastische Verformung des Anschlags oder der Kapsel bewirkt, sodass die Kapsel in Bezug auf den ersten Anschlag verschoben wird und die Drehachse (X1X1') der Seitenwand der Kapsel schwenkt, um sich koaxial zu der Längsachse (XX') der Aufnahme der Kapsel in der Verschlussposition zu positionieren, und
4- in der Verschlussposition wird einerseits die vordere Fläche (1a, 1b) des ersten Teils auf den Kragen (4c) und vorzugsweise zumindest auf einen Abschnitt des Verschlusses (4d) der Kapsel gepresst und andererseits wird die Bodenwand (2c, 2d) der Aufnahme auf die Bodenwand (4b,4b1) der Kapsel gepresst, wodurch eine dichte Kammer begrenzt wird, die mit der Seitenwand (4a) der Kapsel, die in die Aufnahme der Kapsel eingesetzt wird, eine Extraktionskammer bildet, und es wird eine Einspritzung (1i) von Flüssigkeit durch eine oder mehrere Perforationen (4d1, 4d2) des Verschlusses der Kapsel ausgeführt, wobei die Flüssigkeit durch die Perforationen (4b2, 4b3) der Bodenwand der Kapsel in die Extraktionskammer abgeführt wird, und
5- Ausführen einer umgekehrten relativen koaxialen Verschiebung zur Trennung des ersten Teils und des dritten Teils in Bezug auf das zweite Teil von der Verschlussposition in eine zweite dazwischenliegende Trennungsposition, wobei die Kapsel relativ umgekehrt verschoben wird, bis sich die umlaufende Seitenwand (4a) der Kapsel vollständig außerhalb der Aufnahme (2a) der Kapsel in der zweiten dazwischenliegenden Trennungsposition befindet, und
6- in der zweiten dazwischenliegenden Trennungsposition wird die Kapsel, die nicht mehr durch den ersten Anschlag zurückgehalten wird, durch das offene untere Ende des dritten Teils nach unten außerhalb abgeführt, und
7- Ausführen des Schwenkens des dritten Teils von einer Position mit den ersten vertikalen Nuten in eine Position mit den geneigten ersten Nuten, indem die Verschiebung in die Öffnungsposition fortgesetzt wird.

## Claims

1. A device (10) for preparing a flavored beverage, based on flavor, in particular coffee flavor, from a powder contained in a rigid or semi-rigid capsule (4) having a lateral wall of revolution (4a), preferably cylindrical or more preferably frustoconical with circular cross-section, closed on one side by a bottom wall (4b) which is perforated (4b2) or able to be perforated and on the other side by a lid (4d) in the form of a cap film which is perforated (4d1) or able to be perforated, said lid covering a flange (4c) forming a flat annular peripheral rim around an end of said lateral wall (4a), said device comprising:
- a first part (1) containing means for supplying (1i) liquid towards and through the front face (1a) of said first part, and
- a second part (2) containing the means (2e) for discharging said liquid, the front face (2a1) of the second part (2) comprising a capsule housing (2a) able to receive said lateral wall (4a) of the capsule with the bottom wall (4b) of said capsule bearing against the bottom wall (2c, 2d) of said housing (2a), and
- means for displacing in coaxial relative translation (6) said first part (1) and second part (2) between:
- (i) an open position corresponding to a maximum distance of said first and second parts, and
- (ii) a closed position corresponding to a maximum approximation of said first and second parts thus delimiting a sealed extraction compartment with the lateral wall (4a) of the capsule contained in said housing (2a), and
- a third part (3) also called cradle, forming a receptacle of the capsule, able to be positioned between a front face (1a) of the first part and a front face (2a1) of the second part, said third part being mounted to be able to pivot with respect to a transverse axis (YY') perpendicular to the longitudinal axis (XX') of said coaxial relative translation, said third part (3) being able to be driven with said first or second part during one said coaxial relative translation,
**characterized in that** said third part comprises:
- (i.1) elements for guiding and holding said capsule, said lateral wall of the capsule extending outside said guiding and holding elements (3a) on the side of said second part with the axis (X1X1') of said lateral wall of the capsule, positioned perpendicular to a longitudinal guide direction (Y1Y1') of said guiding and holding elements, and
- (i.2) at least a first abutment (3b), said capsule after insertion of said third part being prevented by said first abutment from dropping through the open lower end of said guiding elements and holding elements in said open position, since at least one portion (4a2) of the lateral wall of the capsule is in contact with said first abutment in said open position, and
said third part (3) is able to be driven in translation and to pivot during the following steps a) to c), so that:
a) during one said coaxial relative translation of approximation of said first part and said second part, from said open position to a first intermediate approximation position, said third part and the axis of revolution (X1X1') of said lateral wall (4a) of the capsule retained by said abutment are inclined at a first inclination (α1), and in said first intermediate position, a first portion (4a1) of said lateral wall of the capsule comes into contact against a second abutment (2b1) preferably at the front face of said second part, and
b) during the continuation of said coaxial relative translation of approximation of said first part and said second part from one said first intermediate position to one said closed position, said second abutment (2b1) applies a thrust against said first portion (4a1) of said lateral wall of the capsule, said thrust being transmitted on said first abutment (3b) thereby causing concomitantly, on the one hand, the pivoting of the third part, from one said first inclination to a position in which said longitudinal direction (Y1Y1') of the guiding elements is perpendicular to the direction of said coaxial relative translation of said first and second parts in said closed position and, on the other hand, an elastic deformation of said first abutment (3b) or said lateral wall (4a) of the capsule so that said capsule is displaced in translation with respect to said first abutment by pivoting until the axis of revolution (X1X1') of said lateral wall of the capsule is disposed co-axially with the longitudinal axis (XX') of said capsule housing in said closed position, and
c) during one said reverse coaxial relative translation of distance, from said closed position to a second intermediate distance position, said capsule is driven in coaxial relative translation until the lateral wall (4a) of revolution of the capsule is entirely outside said capsule housing (2a), said capsule, no longer retained by said first abutment, being able to be discharged downwards outside said third part in said second intermediate distance position.

2. The device according to claim 1 **characterized in that** said third part (3) is able to be driven with said first part during one said coaxial relative translation and said third part comprises:
- (i) elements for guiding and holding said capsule comprising two first grooves (3a) opposite each other able, on the one hand, to receive and guide in translation from top to bottom said flange, with two diametrically opposite lateral sides of said flange in and between said first grooves and, on the other hand, to support a face (4c2) of said flange opposite said second part when said third part is in a position inclined at a first inclination, and
- (ii) at least one said first abutment (3b) disposed at said first grooves, at least one lower portion (4a2) of the lateral wall of the capsule resting on said first abutment in said open position, and
said third part (3) is able to be driven in translation and to pivot during the following steps a) to c), so that
- in step a), in said first intermediate approximation position, the lowest portion (4b2) of said bottom wall (4b) is lower than the lowest portion of said flange (4c), and in said first intermediate position, a first upper portion (4a1) of said lateral wall of the capsule comes into contact against the front face of said second part at an upper front end (2b1) of the lateral wall of revolution (2b) of said capsule housing (2a) forming said second abutment, and
- in step b), the upper front end (2b1) of the lateral wall of revolution (2b) of said capsule housing (2a) applies a thrust against said first upper portion (4a1) of said lateral wall of the capsule, said thrust being transmitted on said first abutment (3b) thereby causing concomitantly, on the one hand, the pivoting of the third part, from one said first inclination to a vertical position of the first grooves in said closed position and, on the other hand, an elastic deformation of said abutment or said lateral wall (4a) of the capsule so that said capsule is displaced in translation from top to bottom with respect to said first abutment to a lower area (3a") of said first grooves, and
- in step c), said third part does not pivot and remains in position with said first vertical grooves, and said capsule is driven by the third part in reverse relative translation until said capsule, no longer retained by said first abutment, can be discharged downwards outside said first grooves in said second intermediate distance position.

3. The device according to claim 1 or 2 adapted for a capsule (4a) having a rigid lateral wall, **characterized in that** said first abutment is a resilient abutment able to be deformed under the effect of a force applied against and over said lateral wall (4a) of the capsule resting on said first resilient abutment so that, on the one hand, in step b) said resilient abutment is retracted by said capsule and said lateral wall of the capsule is displaced below said first abutment and, on the other hand, in step c) said first resilient abutment applies a thrust downwards on a second upper portion (4a3) of said lateral wall of the capsule which can be discharged downwards outside said first grooves in said second intermediate distance position without requiring another ejector.

4. The device according to claim 1 or 2 adapted for a capsule having an elastically deformable semi-rigid lateral wall (4a), **characterized in that** said first abutment is a non-deformable and non-displaceable rigid abutment so that, on the one hand, in step b) the lateral wall of the capsule is elastically deformed and said lateral wall of the capsule is displaced below said first abutment and, on the other hand, in step c) a second upper portion (4a3) of said lateral wall of the capsule displaced below said first abutment exerts an upward thrust on said first rigid abutment and the capsule can be discharged downwards and outside said first grooves in said second intermediate distance position without requiring another ejector.

5. The device according to any of claims 2 to 4, **characterized in that** said third part comprises said first grooves comprising:
- an upper area (3a') in which said first grooves are able to retain said flange on its both faces (4c1, 4c2) during one said coaxial relative translation from said open position to said first intermediate position, and
- a lower area (3a") in which, in said closed position, a peripheral portion (1b) of the front face of said first part is able to come into contact against a face (4c1) of said flange outside said housing, the other face (4c2) of said flange bearing on said first grooves and able to drive the capsule in said reverse relative translation of distance towards one said second intermediate position in step b); and
- said first abutment (3b) at said lower area (3a") of said first grooves, able to retain said lateral wall of the capsule resting on an upper bearing surface (3b1) of said first abutment.

6. The device according to any of claims 1 to 5, **characterized in that** a frame (5) supports at least said first part and second part and said relative translation means, said third part being pivotally mounted on said common frame (1-3) supporting the three parts or secured to one of the two first and second parts, and during one said relative translation of both first and second parts, said second part is secured to said frame in a stationary manner relative thereto, and said first part is movable in relative translation with respect to the frame and said second part.

7. The device according to claim 6 **characterized in that** said third part includes a lateral guiding element (3g), preferably a male guiding element in the form of a finger, able to cooperate with a complementary guiding element (5b2) of said frame, respectively preferably a female guiding element, in the form of second guiding grooves and said frame includes a third rigid blocking abutment (5c) positioned behind said third part in said open position, so that:
- during said relative translation of distance, from one said second intermediate distance position to said open position, said third part comes into contact with said third abutment (5c), and said third part driven by said third abutment pivots in the opposite direction in said first inclination position, and
- during said relative translation of approximation, said third part moves away from said third abutment (5c).

8. The device according to any of claims 1 to 7, **characterized in that** said third part is attached in rotation in a hinged manner to one said first part and is automatically driven in rotation towards one said first inclination in said open position and said second intermediate position due to an elastic spring (3e1) and preferably also a fourth abutment (3e2).

9. The device according to any of claims 1 to 8, **characterized in that** said third part is hinged in rotation about an axis of rotation (Y2Y2') perpendicular to the axis (XX') of said capsule housing (2a) located below the level of said capsule housing (2a) and preferably located below the front face portion (1b) of the first part able to bear against said flange (4c) and preferably set back from the front face of the first part and secured to said first part.

10. The device according to any of claims 1 to 9 **characterized in that**:
- the front face of the first part comprises a first peripheral seal (1b) able to be pressed all around said flange (4c) of the capsule in said open position of the first and second parts, and
- said capsule housing (2a) is delimited by a cylindrical lateral wall (2b) and comprises a bottom wall (2c) bordered by a second peripheral seal (2d) against which the periphery of the bottom wall (4b) of said capsule is able to bear in said closed position of the first and second parts, and
- preferably, the front face of the first part comprises a first perforated plate able to diffuse the pressurized liquid through the perforations of said cap of the capsule, said first perforated plate being bordered by said first seal (1b).

11. The device according to any of claims 2 to 10, **characterized in that** it comprises two said first abutments (3b) preferably disposed respectively on each of said first grooves opposite each other.

12. The device according to claim 11, **characterized in that** the cradle (3) comprises 2 said first abutments (3b) disposed on rims (3a1) of said first grooves, preferably front rims (3a1) disposed on the side of said second part, said front rims driving in translation said capsule to make the capsule leave said capsule housing.

13. The device according to any of claims 1 to 12 **characterized in that** it includes:
a- one said first part able to be displaced in translation with respect to a frame (5) supporting said first and second parts using said displacement means in relative translation (6), and
b- one said second part which remains stationary with respect to said frame and which is not able to be displaced in translation using said displacement means in relative translation, and
c- one said third part pivotally mounted on said common frame supporting the three parts, said third part being secured to said first part in said relative translation, said first part comprising first translational guiding elements (1d) cooperating in relative translation with first complementary guiding elements (5b1) secured to an edge (5a) of said frame.

14. A method for using a device according to any of claims 1 to 12, **characterized in that** the following successive steps are carried out:
1- inserting by gravity one said capsule in said first elements for guiding and holding (3a) one said receptacle of said third part inclined in said open position, said capsule (4) being retained by at least one said first abutment (3b), then
2- carrying out a relative translation of approximation of said first part and said third part with respect to said second part from said initial open position to one said first intermediate position in which one said second abutment (2b1) comes into contact against a first portion (4a1) of said lateral wall (4a) of the capsule,
3- continuing said relative translation of approximation of said first part and said third part from one said first intermediate approximation position towards one said closed position, and said second abutment applies a thrust against said first portion (4a1) of said lateral wall of the capsule, which thrust is transmitted on said first abutment (3b) thereby causing concomitantly, on the one hand, the pivoting of the third part and of said capsule from one said first inclination to a position in which said longitudinal direction (Y1Y1') of the guiding elements is perpendicular to the direction of said coaxial relative translation of said first and second parts in said closed position and, on the other hand, the elastic deformation of said abutment or of said capsule, so that said capsule is displaced in translation with respect to said first abutment and the axis of evolution (X1X1') of said lateral wall of the capsule pivots to be positioned co-axially with the longitudinal axis (XX') of said capsule housing in said closed position, and
4- in said closed position, on the one hand pressing the front face (1a, 1b) of said first part against the flange (4c) and preferably at least part of the cap (4d) of said capsule, and on the other hand pressing the bottom wall (2c, 2d) of said housing against the bottom wall (4b, 4b1) of said capsule, thereby delimiting a sealed compartment forming an extraction chamber with the lateral wall (4a) of the capsule inserted into said capsule housing, and carrying out an injection (1i) of liquid through one or several perforation(s) (4d1, 4d2) of said cap of said capsule with discharge (2e) of said liquid through perforations (4b2, 4b3) of the bottom wall of said capsule in said extraction chamber, and
5- carrying out a reverse coaxial relative translation of distance from said first part and said third part with respect to said second part from said closed position to a second intermediate distance position, said capsule being driven in reverse relative translation until the lateral wall (4a) of revolution of the capsule is entirely outside said capsule housing (2a) at said second intermediate distance position, and
6- in said second intermediate distance position, discharging said capsule, no longer retained by said first abutment, downwards outside the open lower end of said third part, and
7- carrying out the pivoting of said third part from a position with said first vertical grooves to a position with said first inclined grooves by continuing said translation towards said open position.
